# EUROPÄISCHE PATENTSCHRIFT

(11) **EP 0 637 491 B1**
(45) Veröffentlichungstag und Bekanntmachung des Hinweises auf die Patenterteilung: **05.11.1997**
(21) Anmeldenummer: 94810432.8
(22) Anmeldetag: 20.07.1994
(51) Int. Cl.: B29C 39/24, B29C 43/34

(54) **Verfahren und Vorrichtung zur Herstellung von Formkörpern**
Process and device for the production of moulded objects
Procédé et dispositif pour la fabrication des objets

(30) Priorität: 29.07.1993 CH 2299/93; 06.08.1993 CH 2350/93
(43) Veröffentlichungstag der Anmeldung: 08.02.1995
(73) Patentinhaber: Novartis AG, 4058 Basel (CH)
(72) Erfinder: Kretzschmar, Otto, Dr., D-64683 Einhausen (DE); Borghorst, Sharla, D-60598 Frankfurt am Main (DE); Golby, John, Dr., d-63739 Aschaffenburg (DE); Hagmann, Peter, Dr., D-63906 Erlenbach am Main (DE); Herbrechtsmeier, Peter, Dr., D-61462 Königstein (DE); Seiferling, Bernhard, Dr., D-63773 Goldbach (DE); Müller, Beat, Dr., CH-1723 Marly (CH)

(56) Entgegenhaltungen:
- EP-A- 0 107 431
- EP-A- 0 318 164
- EP-A- 0 361 101
- EP-A- 0 367 513
- EP-A- 0 484 015
- WO-A-87/04390
- US-A- 4 113 224
- US-A- 4 693 446
- US-A- 4 712 765

## Beschreibung

Die Erfindung betrifft ein Verfahren zur Herstellung von Formkörpern, insbesondere optischen Linsen und speziell Kontaktlinsen, gemäss dem Oberbegriff des jeweiligen unabhängigen Patentanspruchs 1, sowie eine Vorrichtung zur Herstellung von Formkörpern, insbesondere optische Linsen und speziell Kontaktlinsen, gemäß dem Oberbegriff des Patentanspruchs 27.

Kontaktlinsen, welche in grossen Stückzahlen wirtschaftlich herzustellen sind, werden bevorzugt nach sogenannten Mould- Verfahren und speziell nach dem Full-Mold-Verfahren gefertigt. Bei diesen Verfahren werden die Linsen zwischen üblicherweise zwei Formhälften (Moulds) in ihrer endgültigen Form hergestellt, so dass weder eine nachträgliche Bearbeitung der Oberflächen der Linsen noch eine Bearbeitung des Randes erforderlich ist. Mould-Verfahren sind beispielsweise aus der WO-A-87/04390 oder aus der EP-A-0,367,513 bekannt.

Bei diesen bekannten Mould-Verfahren wird die Geometrie der herzustellenden Kontaktlinse durch den Formhohlraum (Formkavität) festgelegt. Der Kontaktlinsenrand wird ebenfalls durch die üblicherweise aus zwei Formhälften bestehende Form gebildet. Die Geometrie des Randes wird durch die Kontur der beiden Formhälften in dem Bereich festgelegt, in dem sie sich berühren.

Zur Herstellung einer Kontaktlinse wird zunächst in die weibliche Formhälfte eine bestimmte Menge eines fliessfähigen Ausgangsmaterials eingebracht. Danach wird die Form durch Aufsetzen der männlichen Formhälfte geschlossen. Normalerweise wird das Ausgangsmaterial etwas überdosiert, so dass die überschüssige Menge beim Schliessen der Form in einen an den Formhohlraum nach aussen sich anschliessenden Überlauf-Raum verdrängt wird. Die anschliessende Polymerisation bzw. Vernetzung des Ausgangsmaterials erfolgt durch Bestrahlung mit UV-Licht bzw. durch Wärmeeinwirkung oder eine andere nicht-thermische Methode. Dabei werden sowohl das Ausgangsmaterial in dem Formhohlraum als auch das überschüssige Material in dem Überlauf-Raum ausgehärtet. Die Aushärtung des überschüssigen Materials kann etwas verzögert erfolgen, da sie anfangs möglicherweise durch Luftsauerstoff inhibiert wird. Um eine fehlerfreie Trennung der Kontaktlinse von dem überschüssigen Material zu erhalten, muss in der Berührungszone der beiden Formhälften eine gute Abdichtung bzw. Verdrängung des überschüssigen Materials erreicht werden. Nur so können fehlerfreie Kontaktlinsenränder erhalten werden.

Als Materialien für die Formen werden heute bevorzugt Kunststoffe wie beispielsweise Polypropylen verwendet. Die Formen werden durch Spritzgiessen hergestellt und nur einmal verwendet (disposable moulds). Dies liegt zum einen daran, dass die Formen durch das überschüssige Material zum Teil verunreinigt sind, beim Abtrennen der Kontaktlinse beschädigt werden oder sich in Teilbereichen irreversibel verformen.

Bei den spritzgegossenen Formen ist zusätzlich noch mit Schwankungen in den Abmessungen durch Schwankungen im Herstellungsprozess (Temperaturen, Drücke, Materialeigenschaften) zu rechnen. Zusätzlich kann noch ein Schwund der Formen nach dem Spritzgiessen auftreten. Diese masslichen Veränderungen der Form können zu Schwankungen der Parameter der herzustellenden Kontaktlinse (Scheitelbrechwert, Durchmesser, Basiskurve, Mittendicke, etc.) führen, was zu einer Verschlechterung der Qualität der Linsen und damit zu einer reduzierten Ausbeute führen kann. Bei nicht ausreichender Abdichtung zwischen den Formhälften wird das überschüssige Material nicht sauber abgetrennt, was zur Ausbildung von sogenannten Schwimmhäuten am Kontaktlinsenrand führt. Bei stärkerer Ausprägung kann dieser kosmetische Fehler am Rand der Linse auch zu einer Irritation beim Tragen einer solchen Linse führen, weshalb solche Linsen durch eine Inspektion aussortiert werden müssen.

Insbesondere wegen der Anforderungen an die Qualität des Kontaktlinsenrandes werden die Formen auch nur einmal verwendet, da eine gewisse Deformation der Formen im Kontaktbereich nicht mit Sicherheit auszuschliessen ist.

Ein Verfahren zur Herstellung von Formkörpern wie Tafeln oder Platten, die einen von einem Mantel umgebenen Kern umfassen, ist aus der US-A-4,712,765 bekannt. Bei diesem Verfahren und der zugehörigen Vorrichtung wird ein bereits geformter Kern in eine Form eingebracht, die ein Basisteil und einen Deckel umfasst. Um den in die Form eingebrachten Kern herum erstreckt sich ein Spalt, der der Dicke des Mantels entspricht. Durch einen prismatischen Spalt, der ausserhalb der eigentlichen Formkavität zwischen Basisteil und Deckel angeordnet ist, der aber mit der Formkavität in Verbindung steht, wird das Material für den Mantel in die Formkavität eingebracht. Die Herstellung von optischen Linsen ist in dieser Druckschrift kein Thema.

In der US-A-4,693,446 ist ein Verfahren zur Herstellung von Kunststoff-Linsen beschrieben. Die Herstellung der Linse erfolgt mit Hilfe zweier Formhälften, zwischen denen eine spezielle, den Rand der Linse definierende Dichtung angeordnet ist. Die durch die beiden Formhälften und die Dichtung gebildete Kavität wird beispielsweise derart befüllt, dass in der Dichtung zwei Löcher vorgesehen sind. Durch eines der Löcher hindurch wird das Material zugeführt, das andere Loch ermöglicht das Entweichen von in der Kavität befindlicher Luft, während die Kavität befüllt wird.

EP-A-0,484,015 offenbart ein Verfahren zur Herstellung von für das Auge bestimmten Linsen wie Kontaktlinsen und Intraokularlinsen. Die Herstellung der Linsen erfolgt derart, dass Monomer in eine weibliche Formhälfte dispensiert und anschliessend mit Hilfe der männlichen Formhälfte die Form geschlossen wird. Das Schliessen der männlichen Formhälfte erfolgt derart, dass beim Bewegen der männlichen Formhälfte auf die weibliche zu die männliche Formhälfte an den Seitenwänden geführt bzw. von diesen Seitenwänden zentriert wird.

In der US-A-4,113,224 ist ein weiteres Mould-Verfahren für die Herstellung von unter anderem Kontaktlinsen beschrieben. Bei diesem Verfahren wird eine Form verwendet, deren Kavität nicht vollständig abgeschlossen ist, sondern über einen dünnen Ringspalt mit einem die Kavität umschliessenden Reservoir-Kanal (Überlaufrinne) verbunden ist. Über den Ringspalt kann während des Vernetzungsvorgangs Material aus dem Reservoir in die Form-Kavität nachfliessen, um den bei den üblicherweise eingesetzten Linsenmaterialien relativ grossen Volumenssschwund auszugleichen.

Die Vernetzung des Materials im Reservoir-Kanal kann dabei mittels einer inhibierenden Gasatmosphäre oder durch Abschirmung gegenüber der die Vernetzung bewirkenden Energiestrahlung verhindert werden. Um das Nachfliessen von Material in die Form-Kavität zu gewährleisten, wird zumindest anfänglich das in der Form-Kavität befindliche Material nur in einem zentralen Bereich, der kleiner als der Durchmesser der Form-Kavität ist, mit Strahlung beaufschlagt oder in diesem zentralen Bereich einer stärkeren Strahlungsintensität ausgesetzt als in dem diesen zentralen Bereich umgebenden Randbereich der Form-Kavität. Nachdem die Vernetzung im zentralen Bereich begonnen und bis zu einem gewissen Grad fortgeschritten ist, wird jedoch auch im Randbereich mit dem anschliessenden Ringspalt und das im Reservoirkanal befindliche Material der vollen Strahlung ausgesetzt und vernetzt. Dabei entstehen zwangsläufig die schon weiter oben erwähnten Grate und Schwimmhäute, so dass die mit diesem bekannten Verfahren hergestellten Formkörper bzw. Kontaktlinsen einer Nachbearbeitung bedürfen.

Ein weiteres Problem bei der Herstellung nach den bisher beschriebenen Verfahren ist, dass es beim Schliessen der Form zu Lufteinschlüssen kommen kann. Lufteinschlüsse in den Linsen haben aber zur Folge, dass die Linsen bei der anschliessenden Inspektion (Qualitätskontrolle) als Ausschuss aussortiert werden. Bisher wird die Form entprechend langsam geschlossen, um ein möglichst vollständiges Entweichen der Luft aus dem Formhohlraum (Formkavität) zu ermöglichen. Dieses vergleichsweise langsame Schliessen der Form nimmt jedoch einen relativ grossen Zeitraum in Anspruch.

Es ist daher eine Aufgabe der Erfindung, ein Verfahren und eine Vorrichtung der genannten Art zu schaffen, bei dem zum einen die Effizienz gross ist, d.h. die Form effizient genutzt werden kann, und bei dem der Aufwand vergleichsweise gering ist, wobei jedoch immer die Vorgabe besteht, dass der hergestellte Formkörper (z.B. Kontaktlinse) von Lufteinschlüssen frei ist.

Verfahrensmässig wird diese Aufgabe dadurch gelöst, dass das Befüllen der Formkavität in dem in zumindest teilweise noch unvernetztem Zustand befindlichen Ausgangsmaterial erfolgt. Dadurch wird erreicht, dass von vornherein beim Befüllen der Form keine Luft mehr in der Form sein kann, mithin also Lufteinschlüsse gänzlich vermieden werden. Als Folge kann die Form schneller geschlossen und damit effizienter genutzt werden, dies bei gleichzeitig vergleichsweise sehr geringem Aufwand. Im übrigen ist auf diese Weise auch automatisch eine exakte Dosierung der erforderlichen Menge des Ausgangsmaterials gegeben, da die Befüllung im Ausgangsmaterial erfolgt.

Zweckmäßige Weiterbildungen der Erfindung sind in den abhängigen Verfahrensansprüchen 2 bis 26 beschrieben.

In einer Variante des Verfahrens kann zum Befüllen der Formkavität diese mit einem sie räumlich umgebenden Reservoir in Verbindung gebracht werden, in welchem das Ausgangsmaterial bereitgestellt wird und aus welchem die Formkavität geflutet wird. Dies ist eine Verfahrensvariante mit besonders geringem technischen Aufwand.

In einer weiteren Verfahrensvariante wird die Form auch in dem Ausgangsmaterial geschlossen, um das Risiko auszuschliessen, dass während des Schliessvorgangs auf irgendeinem Weg Luft in die Formkavität gelangen kann.

In einer weiteren Variante wird eine Form verwendet, die einen Behälter und ein in diesem Behälter verschiebbares Formteil umfasst. Dieses Formteil ist zum Öffnen und Schliessen der Form von der ihm gegenüberliegenden Behälterwand weg und auf diese Behälterwand zu bewegbar. Während des Öffnens der Form wird Ausgangsmaterial zwischen Behälterwand und Formteil zugeführt und während des Schliessens der Form Ausgangsmaterial wieder abgeführt. Durch das Bewegen des verschiebbaren Formteils von der gegenüberliegenden Behälterwand weg wird der Raum zwischen dem verschiebbaren Formteil und der Behälterwand mit Ausgangsmaterial gefüllt, ohne dass Luft in diesen Raum eindringen kann. Anschliessend wird durch das Bewegen des verschiebbaren Formteils auf die Behälterwand zu das zwischen Formteil und Behälterwand befindliche Ausgangsmaterial wieder abgeführt, wobei das in der Formkavität befindliche Material natürlich in dieser zurückbleibt. Auch beim Bewegen des Formteils auf die Behälterwand zu kann keinerlei Luft in die Formkavität gelangen, wodurch lufteinschlussfreie Formkörper auf einfache und effiziente Weise hergestellt werden können.

Beispielsweise kann eine Form mit zwei Formhälften verwendet werden, wobei die eine Formhälfte an der Behälterwand und die andere Formhälfte an dem verschiebbaren Formteil vorgesehen ist. Dabei kann eine Form mit einer Vaterformhälfte und einer Mutterformhälfte verwendet werden, wobei an der Behälterwand die Vaterformhälfte und an dem verschiebbaren Formteil die Mutterformhälfte vorgesehen ist. Zum Zu- und Abführen des Ausgangsmaterials können vorteilhafterweise Pumpen verwendet werden. Bei einer weiteren vorteilhaften Verfahrensvariante kann zum Zu- und Abführen des Ausgangsmaterials das verschiebbare Formteil angetrieben werden.

Auf besonders einfache Weise kann der vernetzte Formkörper entformt werden durch Ausspülen der Form mit Ausgangsmaterial. Dies kann beispielsweise derart erfolgen, dass der Formkörper durch die Strömung des Ausgangsmaterials beim Öffnen der Form von der Form abgelöst und beim Schliessen der Form aus der Form herausgespült wird.

Bei einer Variante des Verfahrens wird in einem ersten Zyklus die Form geöffnet und wieder geschlossen. Anschliessend erfolgt zumindest die für die Entformbarkeit des Formkörpers erforderliche Vernetzung durch Beaufschlagung mit Energie. In einem zweiten Zyklus wird die Form erneut geöffnet, wobei der Formkörper von der Form abgelöst wird. Danach wird das Formteil erneut auf die gegenüberliegende Behälterwand zu bewegt, die Form also erneut geschlossen, wobei der vernetzte Formkörper aus der Form herausgespült wird. Diese "Zwei-Zyklen"-Variante des Verfahrens zeichnet sich dadurch aus, dass in dem ersten Zyklus die Herstellung des Formkörpers erfolgt, der dann anschliessend in einem zweiten Zyklus aus der Form herausgespült wird. In dem "Spülzyklus" kann gleichzeitig eine Reinigung der Form erfolgen.

Die eben beschriebene Verfahrensvariante kann entweder so ablaufen, dass zunächst ein "Herstellungszyklus" (erster Zyklus) und anschliessend ein separater "Spülzyklus" (zweiter Zyklus, z.B. mit einer Spülflüssigkeit) vorgesehen ist, es kann aber auch so ablaufen, dass das Ausspülen mit dem Herstellungszyklus eines neuen Formkörpers zusammenfällt, also beim Einfüllen von neuem Ausgangsmaterial in die Formkavität der im vorangehenden Zyklus hergestellte Formkörper aus der Form herausgespült wird. Die "Zwei-Zyklen"-Variante des Verfahrens wird dann zu einer "Ein-Zyklus"-Variante.

Der vernetzte Formkörper kann aber auch mittels einer Greifeinrichtung aus der Form entnommen werden. Dies kann derart erfolgen, dass der mittels der Greifeinrichtung aus der Form entnommene Formkörper ausserhalb des Raums zwischen dem verschiebbaren Formteil und der gegenüberliegenden Behälterwand auf dem verschiebbaren Formteil abgelegt wird. Der auf dem verschiebbaren Formteil abgelegte Formkörper kann dabei durch Unterdruck an diesem festgehalten und dann durch Überdruck von diesem abgelöst werden.

Bei einer weiteren Verfahrensvariante wird die Form nach dem Einbringen des Ausgangsmaterials in die Formkavität nicht vollständig geschlossen, so dass ein die Formkavität umschliessender, mit dieser in Verbindung stehender, unvernetztes Ausgangsmaterial enthaltender Ringspalt offen bleibt. Dadurch kann einerseits ein bei der Vernetzung entstehender Volumenschwund ausgeglichen werden, indem nämlich durch den Ringspalt Ausgangsmaterial in die Formkavität nachströmt. Auf der anderen Seite wird dadurch auch vermieden, dass die Formhälften bei der Herstellung des Formkörpers fest gegeneinander gepresst werden. Insbesondere wegen der Gefahr, dass sich die Formhälften bei einer mechanischen Beanspruchung irreversibel verformen, sind bisher die Formhälften nur einmal verwendet worden, wie eingangs erläutert worden ist. Gemäss dieser Verfahrensvariante ist es möglich, die Formhälften mehrfach zu verwenden.

Es ist auch denkbar, dass die Form während der fortschreitenden Vernetzung des Materials dem Vernetzungsschwund folgend weiter geschlossen wird.

In jedem Fall ist es jedoch wichtig, dass ein vor der Vernetzung wenigstens zäh fliessfähiges Ausgangsmaterial verwendet wird, damit zur Schwundkompensation Ausgangsmaterial durch den Ringspalt in die Formkavität nachfliessen kann.

Des weiteren ist es möglich, die Beaufschlagung des Materials mit die Vernetzung bewirkender Energie räumlich auf den Bereich der Formkavität zu begrenzen, so dass im wesentlichen lediglich das in der Formkavität befindliche Ausgangsmaterial, also der Bereich des Formkörpers, speziell der Kontaktlinse, vernetzt wird. Eventuell vorhandenes überschüssiges Ausgangsmaterial wird nicht polymerisiert bzw. vernetzt. Teilbereiche des Formkörper-Randes werden dabei nicht durch eine mechanische Begrenzung des Materials durch Formwände, sondern durch eine räumliche Begrenzung der die Polymerisation bzw. Vernetzung auslösenden Energie-Beaufschlagung (üblicherweise UV- oder andere Strahlung) gebildet. Durch diese beiden Massnahmen kann in einer bevorzugten Ausführungsform ein Kontakt der beiden Formhälften vermieden werden, so dass diese nicht deformiert werden und entsprechend wiederverwendet werden können. Ausserdem kann dadurch auch das bekannte Problem des bei der Vernetzung auftretenden Volumenschwunds sehr einfach in den Griff bekommen werden, ohne dass wie z.B. im Fall der US-A-4,113,224 eine mechanische Nachbearbeitung des Formkörpers erforderlich ist.

Außerdem ist es möglich die räumliche Begrenzung der Energiebeaufschlagung durch für die betreffende Energieform wenigstens teilweise undurchlässige Maskierung der Form zu erlangen. Als Energie für die Vernetzung wird Strahlungsenergie, insbesondere UV-Stahlung, Gamma-Strahlung, Elektronen-Strahlung oder thermische Strahlung verwendet, wobei die Strahlungsenergie vorzugsweise in Form eines im wesentlichen parallelen Strahlungsbündels verwendet wird, um zum einen eine gute Begrenzung und zum anderen eine effektive Ausnutzung der Energie zu erzielen.

Ebenso ist es möglich eine Form zu verwenden, die wenigstens einseitig für die die Vernetzung bewirkende Energieform gut durchlässig ist. Die räumliche Begrenzung der Energiebeaufschlagung erfolgt durch für die Energieform schlecht oder nicht durchlässig ausgebildete Teile der Form.

Ferner ist es möglich, eine Form zu verwenden, die wenigstens aus einer Richtung für die die Vernetzung bewirkende Energieform gut durchlässig ist. Die räumliche Begrenzung der Energiebeaufschlagung erfolgt durch eine ausserhalb der Formkavität an oder in der Form vorgesehene, für die Energie schlecht oder nicht durchlässige Maske.

Dabei wird die Maske vorzugsweise im Bereich von Trennebenen bzw. Trennflächen verschiedener Teile der Form angeordnet, insbesondere in mit dem vernetzbaren Ausgangsmaterial in Berührung stehenden Bereichen dieser Teile.

Schließlich ist es auch möglich, die die Vernetzung bewirkende Energie von dem in diesem Ringspalt befindlichen Ausgangsmaterial fernzuhalten, damit die Vernetzung nur in der Formkavität stattfinden kann und insbesondere ein Nachfliessen von Ausgangsmaterial zur Kompensation des Volumenschwunds möglich ist. Die Form kann auch während der fortschreitenden Vernetzung des Materials dem Vernetzungsschwund folgend weiter geschlossen werden.

Dabei wird ein vor der Vernetzung wenigstens zäh fliessfähiges Ausgangsmaterial verwendet, damit zur Schwundkompensation Ausgangsmaterial durch den Ringspalt in die Formkavität nachfliessen kann. Falls dem Formkörper nach der Entformung noch unvernetztes Ausgangsmaterial anhaftet, kann dieses durch Spülung mit einem geeigneten Lösungsmittel entfernt werden. Eine mechanische Nachbearbeitung des Formkörpers entfällt aber in jedem Fall.

Vorrichtungsmässig wird die Aufgabe der Erfindung dadurch gelöst, dass beim Befüllen der Formkavität diese in zumindest teilweise noch in unvernetztem Zustand befindlichem Ausgangsmaterial angeordnet ist. Dadurch wird erreicht, dass von vornherein beim Befüllen der Form keine Luft mehr in der Form sein kann, mithin also Lufteinschlüsse gänzlich vermieden werden. Als Folge kann die Form schneller geschlossen und damit effizienter genutzt werden, dies bei gleichzeitig vergleichsweise sehr geringem Aufwand.

Zweckmäßige Weiterbildungen der Erfindung gemäß Anspruch 27 sind in den abhängigen Ansprüchen 28 bis 40 beschrieben.

In einem Ausführungsbeispiel umfasst die Vorrichtung ein Reservoir zur Bereitstellung des Ausgangsmaterials, welches die Formkavität räumlich umgibt. Dieses Reservoir ist mit der Formkavität verbindbar. Beim Befüllen der Formkavität ist das Reservoir mit der Formkavität verbunden und flutet diese. Dies erlaubt mehrere konstruktiv besonders einfache Weiterbildungen, die im einzelnen noch genauer erläutert werden.

In einem weiteren Ausführungsbeispiel umfasst die Vorrichtung Mittel zum Schliessen der im Ausgangsmaterial angeordneten Form, wobei auch hier die Form stets im Ausgangsmaterial geschlossen wird, so dass keine Luft in die Formkavität gelangen kann.

In einem vorteilhaften Ausführungsbeispiel umfasst die Form einen Behälter und ein in diesem Behälter verschiebbares Formteil, welches zum Öffnen und Schliessen der Form von der ihm gegenüberliegenden Behälterwand weg und auf diese Behälterwand zu bewegbar ist. In dem Behälter ist ein Einlass vorgesehen, durch den während des Öffnens der Form Ausgangsmaterial zwischen Behälterwand und Formteil hineinströmt. Ferner ist in dem Behälter ein Auslass vorgesehen, durch den während des Schliessens der Form Ausgangsmaterial wieder herausströmt. Dieses Ausführungsbeispiel ist konstruktiv vergleichsweise einfach, also wenig aufwendig, und daher für den praktischen Einsatz gut geeignet.

Die Form weist dabei vorzugsweise zwei Formhälften auf, wobei eine Formhälfte an der Behälterwand und die andere an dem verschiebbaren Formteil vorgesehen ist. Die Form weist (speziell bei der Herstellung von Kontaktlinsen) eine Vaterformhälfte und eine Mutterformhälfte auf. Dabei ist bevorzugt die Vaterformhälfte an der Behälterwand und die Mutterformhälfte an dem verschiebbaren Formteil vorgesehen. Bei dieser Ausgestaltung kann der Formkörper (Kontaktlinse) später besonders einfach entformt werden.

Zum Zuführen und/oder Abführen von Ausgangsmaterial sind Pumpen vorgesehen, die beim Öffnen der Form durch den Einlass Ausgangsmaterial zwischen Behälterwand und Formteil zuführen und beim Schliessen der Form durch den Auslass wieder abführen. Solche Pumpen arbeiten zuverlässig und bedeuten daher keinerlei besonderen Aufwand.

In einem weiteren Ausführungsbeispiel sind Mittel zum Antreiben des verschiebbaren Formteils vorgesehen. Diese können sowohl bei einer Vorrichtung, die ohne Pumpen arbeitet, als auch bei einer Vorrichtung mit Pumpen vorgesehen sein, um das verschiebbare Formteil in Richtung der gegenüberliegenden Behälterwand zu bewegen, und somit zwischen den Formhälften befindliches Ausgangsmaterial wieder herauszudrücken.

Bei einem weiteren Ausführungsbeispiel der Vorrichtung sind Mittel zum Erzeugen einer Strömung vorgesehen. Diese Strömung löst den Formkörper beim Öffnen der Form von der Form ab und spült ihn beim Schliessen der Form aus der Form heraus. Diese Mittel können als Düsen oder ähnlich wirkende Mittel ausgebildet sein. Wichtig ist, dass sie eine Strömung bzw. eine Verwirbelung des zwischen den Formhälften befindlichen Ausgangsmaterials erzeugen, sodass der Formkörper (Kontaktlinse) mittels der Strömung bzw. mittels der Verwirbelung von der Formhälfte abgehoben wird.

Des weiteren ist es möglich, daß in einem ersten Zyklus ("Herstellungszyklus") zunächst durch den Einlass hindurch Ausgangsmaterial zwischen Behälterwand und verschiebbares Formteil hinein und anschliessend wieder durch den Auslass herausströmt. Daran anschliessend beaufschlagt die Quelle für die Energie die Form mit einer für die Entformbarkeit des Formkörpers erforderlichen Menge an Energie, sodass die Vernetzung erfolgt. Anschliessend strömt in einem zweiten Zyklus durch den Einlass hindurch z.B. wieder Ausgangsmaterial zwischen Behälterwand und verschiebbares Formteil hinein, löst den Formkörper von der Form ab und spült ihn durch den Auslass heraus.

Diese "Zwei-Zyklen"- Vorrichtung zeichnet sich dadurch aus, dass in dem ersten Zyklus die Herstellung des Formkörpers erfolgt, welcher anschliessend in dem zweiten Zyklus (Spülzyklus, Reinigungszyklus) aus der Form herausgespült wird, wobei auch gleichzeitig die Form gereinigt wird.

Diese Vorrichtung kann entweder so ausgebildet sein, dass wie beschrieben zunächst ein "Herstellungszyklus" (erster Zyklus) und anschliessend ein separater "Spülzyklus" (zweiter Zyklus) vorgesehen ist, sie kann aber auch so ausgebildet sein, dass das Ausspülen mit dem Herstellungszyklus eines neuen Formkörpers zusammenfällt, also beim Einfüllen von neuem Ausgangsmaterial in die Formkavität der im vorangehenden Zyklus hergestellte Formkörper aus der Form herausgespült wird. Die "Zwei-Zyklen"-Vorrichtung wird dann zu einer "Ein-Zyklus"-Vorrichtung. Bei der "Ein-Zyklus"-Vorrichtung muss aber zum Spülen Ausgangsmaterial verwendet werden, während bei der "Zwei-Zyklen"-Vorrichtung im Spülzyklus auch die Verwendung einer speziellen Reinigungsflüssigkeit denkbar ist.

Zur Entnahme des Formkörpers kann eine Greifeinrichtung vorgesehen sein, die den vernetzten Formkörper aus der Form entnimmt. In bevorzugter Weise weist zu diesem Zweck der Behälter auf einer von der formgebenden Fläche verschiedenen Behälterwand eine Ausbuchtung oder Nische auf, die sich im wesentlichen in Richtung der Bewegung des verschiebbaren Formteils erstreckt. In dieser Ausbuchtung oder Nische ist die Greifeinrichtung angeordnet. Das verschiebbare Formteil weist auf einer Aussenwand, die nicht der formgebenden Behälterwand gegenüberliegt, eine Einbuchtung auf, in welche hinein die Greifeinrichtung den entnommenen Formkörper ablegt. Dies ist eine konstruktiv besonders zweckmässige und einfache Ausgestaltung der Vorrichtung.

Diese Vorrichtung kann noch so weitergebildet sein, dass das verschiebbare Formteil einen zu der Einbuchtung führenden Kanal aufweist, der an eine Unter- bzw. Überdruckquelle anschliessbar ist. Der Kanal ist dann, wenn die Greifeinrichtung den entnommenen Formkörper in die Einbuchtung des Formteils hinein ablegt, an die Unterdruckquelle angeschlossen. Zum Ablösen der Linse ist er dann anschliessend an die Überdruckquelle angeschlossen. Damit kann während eines Zyklus die Linse hergestellt und während des nächsten Zyklus entnommen, auf dem Formteil abgelegt und anschliessend vom Formteil abgenommen werden. Dies ist sowohl bei einer als "Zwei-Zyklus"-Vorrichtung ausgebildeten Vorrichtung als auch bei einer als "Ein-Zyklus"-Vorrichtung ausgebildeten Vorrichtung möglich.

Bei einem weiteren Ausführungsbeispiel der Vorrichtung ist die Form mit Distanzmitteln versehen, welche die beiden Formhälften bei geschlossener Form in geringem Abstand zueinander halten, so dass ein die Formkavität umschliessender und mit dieser in Verbindung stehender Ringspalt gebildet wird.

Dadurch kann einerseits ein bei der Vernetzung entstehender Volumenschwund ausgeglichen werden, da nämlich durch den Ringspalt Ausgangsmaterial in die Formkavität nachströmen kann. Auf der anderen Seite wird dadurch auch vermieden, dass die Formhälften bei der Herstellung des Formkörpers fest gegeneinander gepresst werden. Insbesondere wegen der Gefahr, dass sich die Formhälften bei einer mechanischen Beanspruchung irreversibel verformen, sind bisher die Formhälften nur einmal verwendet worden, wie eingangs erläutert worden ist. Wird dieses Ausführungsbeispiel der Vorrichtung verwendet, ist es möglich, die Formhälften mehrfach zu verwenden. Ausserdem ist es auch denkbar, die Vorrichtung so weiterzubilden, dass die Form mit elastischen Mitteln oder Verstellmitteln versehen ist, welche eine dem Vernetzungsschwund folgende Annäherung der beiden Formhälften erlauben.

Ferner ist es möglich, Mittel vorzusehen, die die Beaufschlagung der Form mit Energie auf den Bereich der Formkavität begrenzen, so dass im wesentlichen lediglich das in der Formkavität befindliche Ausgangsmaterial, also der Bereich des Formkörpers, speziell der Kontaktlinse, vernetzt wird. Eventuell vorhandenes überschüssiges Ausgangsmaterial wird nicht polymerisiert bzw. vernetzt. Teilbereiche des Formkörper-Randes werden dabei nicht durch eine mechanische Begrenzung des Materials durch Formwände, sondern durch eine räumliche Begrenzung der die Polymerisation bzw. Vernetzung auslösenden Energie-Beaufschlagung (üblicherweise UV- oder andere Strahlung) gebildet. Durch diese beiden Massnahmen kann in einer bevorzugten Ausführungsform ein Kontakt der beiden Formhälften vermieden werden, so dass diese nicht deformiert werden und entsprechend wiederverwendet werden können. Ausserdem kann dadurch auch das bekannte Problem des bei der Vernetzung auftretenden Volumenschwunds sehr einfach in den Griff bekommen werden, ohne dass wie z.B. im Fall der US-A-4,113,224 eine mechanische Nachbearbeitung des Formkörpers erforderlich ist.

Außerdem ist es mõglich, die Form mit einer für die Energie nicht oder schlecht durchlässigen Maske zu versehen, welche mit Ausnahme der Formkavität alle unvernetztes Material enthalten könnenden Formhohlräume bzw. mit dem Material in Kontakt kommen könnenden Formflächen gegenüber der Energie abschirmt. Dabei kann die Form zwei Formhälften aufweisen, die längs einer Trennfläche getrennt sind und die Maske ist an einer der beiden Formhälften und/oder an beiden Formhälften im Bereich der Trennfläche ausserhalb der Formkavität angeordnet.

Auch ist es möglich, daß die Quelle für die Energie UV-Strahlung erzeugt, und daß wenigstens eine der Formhälften der Form aus UV-durchlässigem Material, insbesondere aus Quarz besteht. Die Maske kann dabei aus einer Schicht aus für UV-Strahlung nicht durchlässigem Material, insbesondere aus einer Chrom-Schicht, bestehen. Bei dem Ausführungsbeispiel der Vorrichtung mit dem Ringspalt kann die Maske im Bereich des Ringspalts angeordnet sein.

Schließlich kann bei einer Vorrichtung, bei der die Vernetzung räumlich auf den Bereich der Formkavität beschränkt wird, die Form natürlich ebenfalls mit elastischen Mitteln oder Verstellmitteln versehen sein, welche eine dem Vernetzungsschwund folgende Annäherung der beiden Formhälften erlauben.

Insbesondere können nach dem Verfahren bzw. mit den beschriebenen Vorrichtung Formkörper, insbesondere optische Linsen und speziell Kontaktlinsen, hergestellt werden.

Im folgenden wird die Erfindung anhand der Zeichnung näher erläutert. Es zeigen, teilweise in schematischer Darstellung bzw. im Schnitt:
- Fig. 1A-C: ein Ausführungsbeispiel der erfindungsgemässen Vorrichtung,
- Fig. 2A-C: ein weiteres Ausführungsbeispiel der erfindungsgemässen Vorrichtung,
- Fig. 3A-C: eine Variante des Ausführungsbeispiels der Fig. 2,
- Fig. 4A-C: ein weiteres Ausführungsbeispiel der erfindungsgemässen Vorrichtung,
und
- Fig. 5: eine vergrösserte Darstellung des Randbereichs eines Ausführungsbeispiels einer Form in geschlossenem Zustand.

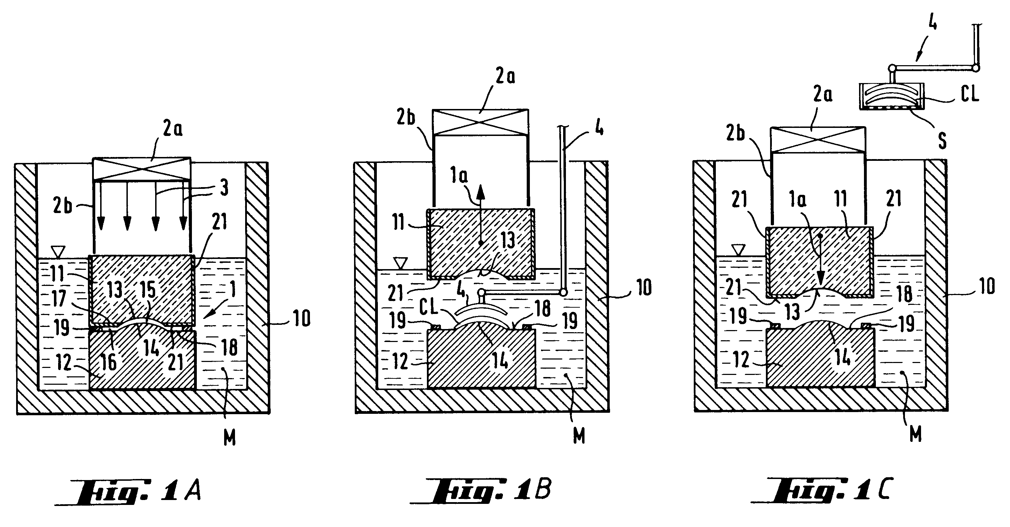

Das in den Fig. 1A-C gezeigte Ausführungsbeispiel der erfindungsgemässen Vorrichtung ist für die Herstellung von Kontaktlinsen aus einem flüssigen Ausgangsmaterial konzipiert, das z.B. durch UV-Strahlung polymerisiert bzw. vernetzt werden kann. In Fig. 1A erkennt man dabei die Form 1 in geschlossenem Zustand. Die Form 1 ist in einem Behälter 10 angeordnet, der mit unvernetztem flüssigem Ausgangsmaterial M gefüllt ist. Ferner umfasst die Vorrichtung eine Energiequelle in Form einer UV-Lichtquelle 2a sowie Mittel 2b, die die von der UV-Lichtquelle 2a bereitgestellte Energie in Form eines parallelen Strahlenbündels 3 auf die Form 1 richten. Diese Mittel 2a können insbesondere auch eine Blende umfassen, die zwischen der UV-Lichtquelle 2a und dem Behälter 10 angeordnet ist. Selbstverständlich können die UV-Lichtquelle 2a und die Mittel 2b zu einer einzigen Einheit zusammengefasst sein.

Details zum allgemeinen Aufbau, zu Dimensionierungs-, Material- und Stabilitätsfragen etc. sowie zu beispielsweise in Frage kommenden Materialien für die Formkörper und zu verfahrenstechnischen Aspekten sind sehr umfassend in der EP-A-0,367,513 und insbesondere in der US-A-4,113,224 abgehandelt, und diese Dokumente werden daher ausdrücklich zum integrierten Bestandteil der vorliegenden Beschreibung erklärt (incorporation by reference).

Die Form 1 umfasst zwei Formhälften 11 und 12, die je eine gekrümmte Formfläche 13 bzw. 14 aufweisen, welche zusammen eine Formkavität 15 definieren, die ihrerseits wiederum die Gestalt der herzustellenden Kontaktlinse CL bestimmt. Die Formfläche 13 der oberen Formhälfte 11 ist konkav und bestimmt die Vorderfläche mit dem daran anschliessenden Randbereich. Üblicherweise wird diese Formhälfte 11 als Mutterformhälfte bezeichnet. Die Formfläche 14 der unteren Formhälfte 12 ist konvex und bestimmt die Rück- oder Basisfläche der Kontaktlinse CL und den daran anschliessenden Randbereich derselben. Diese Formhälfte 12 wird üblicherweise als Vaterformhälfte bezeichnet.

Die Formkavität ist im Unterschied zu den z.B. aus den eingangs erwähnten Dokumenten WO-A-87/04390 oder EP-A-0,367,513 bekannten Formen nicht vollständig und dicht abgeschlossen, sondern im gezeigten Ausführungsbeispiel sind sie im Bereich ihres Umfangsrands, der den Rand der herzustellenden Kontaktlinse CL definiert, ringsum offen. Dort steht die Formkavität 15 auch mit einem relativ schmalen Ringspalt 16 in Verbindung, so wie dies auch bei den in der US-A-4,113,224 gezeigten Formen der Fall ist. Der Ringspalt 16 ist durch je eine ebene Formwand 17 und 18 an der Mutterformhälfte 11 bzw. der Vaterformhälfte 12 begrenzt. Um ein vollständiges Schliessen der Form zu verhindern, sind an der Vaterformhälfte 12 Distanzmittel in Form von Distanzbolzen 19 vorgesehen, die die Mutterformhälfte 11 auf Distanz halten, also ein vollständiges Schliessen der Form verhindern und so den Ringspalt 16 definieren. Die Distanzbolzen können verstellbar sein(z.B. mittels eines in die Vaterformhälfte eingelassenen, nicht dargestellten Gewindes), sie können auch federnd ausgebildet sein. Auf diese Weise können durch Verstellen der Distanzmittel oder entgegen einer Federkraft die beiden Formhälften 11 und 12 während des Vernetzugsvorgangs zwecks Schwundausgleich aufeinander zu bewegt werden. Die Form ist selbstverständlich in der üblichen Weise, z.B. mittels einer hier nur durch den Pfeil 1a angedeuteten Schliesseinheit, öffen-und schliessbar. Die Verstellung des Abstands der beiden Formhälften für den Schwundausgleich kann z.B. auch mittels dieser externen Schliesseinheit erfolgen.

In einer anderen, hier nicht gezeigten Ausführungsform kann anstelle des durchgehenden Ringspalts 16 und der Distanzmittel 19 auch eine Reihe von segementförmigen Spalten vorgesehen sein, wobei die Zwischenräume zwischen den einzelnen Segmentspalten die Funktion der Distanzmittel übernehmen. Selbstverständlich sind auch noch andere Konfigurationen möglich.

Die beiden Formhälften 11 und 12 bestehen aus einem für die gewählte Energie, hier wie erwähnt z.B. UV-Licht, möglichst gut durchlässigen Material, z.B. aus für solche Zwecke üblicherweise eingesetztem Polypropylen oder einem anderen Polyolefin. Da die Bestrahlung mit UV-Licht hier nur einseitig, und zwar von oben, erfolgt, braucht eigentlich nur die obere, das heisst hier die Mutterformhälfte 11 UV-durchlässig zu sein. Für die Bestrahlung von unten durch die Vaterformhälfte 12 hindurch gilt natürlich sinngemäss dasselbe. Gemäss einer besonders zweckmässigen und vorteilhaften Ausgestaltung der Erfindung besteht wenigstens die vom UV-Licht bestrahlte Formhälfte aus Quarz. Dieses Material hat nicht nur eine besonders gute UV-Durchlässigkeit, sondern ist auch sehr hart und widerstandsfähig, so dass aus diesem Material hergestellte Formen sehr gut wiederverwendet werden können. Voraussetzung dafür ist jedoch, wie aus den folgenden Erläuterungen noch näher hervorgeht, dass die Form entweder kraftlos oder nicht vollständig geschlossen wird, so dass die Formhälften nicht durch Berührung beschädigt werden. Alternativ zu Quarz kommen auch UV-durchlässige Spezialgläser oder Saphir in Frage. Wegen der Wiederverwendbarkeit der Form bzw. Formhälften kann bei ihrer Anfertigung ein relativ hoher Aufwand getrieben werden, um Formen mit extrem hoher Präzision und Reproduzierbarkeit zu erhalten. Da sich die Formhälften im Bereich der herzustellenden Linse, das heisst im Bereich der Formkavität 15 bzw. der eigentlichen Formflächen nicht berühren, ist eine Beschädigung durch Berührung ausgeschlossen. Damit ist eine hohe Standzeit der Formen sichergestellt. Dies hat auch günstige Konsequenzen auf die Reproduzierbarkeit der herzustellenden Kontaktlinsen bzw. Formkörper generell.

Der Raum zwischen den beiden Formhälften 11 und 12 und damit auch die Formkavität 15 ist während des gesamten Herstellungsprozess in dem unvernetzten Ausgangsmaterial M angeordnet. Gemäss dem allgemeinen Erfindungsgedanken ist jedenfalls zumindest die Formkavität beim Befüllen vollständig in dem in unvernetztem Zustand befindlichen Ausgangsmaterial angeordnet. In Fig. 1B erkennt man, dass die obere Formhälfte 11 selbst in geöffnetem Zustand nicht ganz aus dem Ausgangsmaterial M herausragt, der Raum zwischen den Formhälften 11 und 12 bleibt immer unterhalb des Flüssigkeitsspiegels des im Behälter 10 befindlichen Ausgangsmaterials M. Somit steht der Raum zwischen den beiden Formhälften und insbesondere auch die Formkavität mit dem im Behälter 10 befindlichen Ausgangsmaterial M ständig in Verbindung. Es kann damit zu keinem Zeitpunkt Luft in den Raum zwischen den beiden Formhälften 11 und 12 gelangen.

Ist die Formkavität gefüllt und die Form geschlossen (Fig. 1A), wird sie mit UV-Strahlen 3 beaufschlagt und es wird so eine Vernetzung des Formkörpers erreicht.

Nach der Vernetzung wird die Form geöffnet und der Formkörper in Form der Kontaktlinse CL wird entformt, also von der Form abgenommen und aus der Form entnommen. In Fig. 1C ist zu diesem Zweck symbolisch die Greifeinrichtung 4 vorgesehen, die dann, wenn die obere Formhälfte abgehoben ist, die Kontaktlinse CL von der Vaterformhälfte 12 abnimmt (Fig. 1B) und sie aus der Form entfernt (Fig. 1C). Das Entformen und Entnehmen der Kontaktlinse bzw. der Formkörpers aus der Form kann aber auch auf andere Art und Weise erfolgen, wie anhand der anderen Ausführungsbeispiele noch erläutert wird. Nach dem Entnehmen der Kontaktlinse bzw. des Formkörpers kann die Form nun wieder geschlossen werden und eine neue Kontaktlinse CL hergestellt werden.

Da der gesamte Herstellungsvorgang gemäss Fig. 1A-C unterhalb des Flüssigkeitsspiegels des Ausgangsmaterials M im Behälter 10 stattfindet, kann keine Luft in den Raum zwischen den beiden Formhälften 11 und 12 und insbesondere nicht in die Formkavität 15 gelangen. Da das Öffnen und Schliessen der Form unterhalb des Flüssigkeitsspiegels stattfindet, kann auch die Form vergleichsweise schnell geschlossen werden, was bei den Verfahren bzw. Vorrichtungen gemäss dem Stand der Technik nicht möglich war. Es können somit Kontaktlinsen, die frei von irgendwelchen Lufteinschlüssen sind, effizient und mit geringem Aufwand hergestellt werden.

In dem in Fig. 1A-C gezeigten Ausführungsbeispiel wird zusätzlich die Beaufschlagung der Form mit UV-Strahlen auf das Material in der Formkavität 15 begrenzt, das heisst es wird nur das in der Formkavität 15 befindliche Material vernetzt. Insbesondere wird das Ausgangsmaterial in dem Ringspalt 16, der die Formkavität 15 umgibt, und das übrige im Behälter 10 befindliche Ausgangsmaterial M nicht mit Energie beaufschlagt und nicht vernetzt. Unter der Formkavität wird hier somit derjenige Hohlraum der geschlossenen Form verstanden, welcher durch die vollständige Kontur des herzustellenden Formkörpers, im speziellen also der Kontaktlinse CL, definiert ist. Der in die Formkavität mündende Ringspalt 16 gehört hier somit nicht zur Formkavität 15.

Für die praktische Realisierung ist gemäss Fig. 1A-C an der Formwand 17 im Bereich des Ringspalts 16 eine für die verwendete Energie, hier also UV-Licht, undurchlässige (oder wenigstens im Vergleich zur Durchlässigkeit der Form schlecht durchlässige) Maske 21 vorgesehen, welche sich bis unmittelbar an die Formkavität heran erstreckt und mit Ausnahme der Formkavität alle übrigen Teile, Hohlräume oder Flächen der Form, welche mit dem hier flüssigen unvernetzten, eventuell überschüssigen Material in Kontakt sind oder kommen können, gegenüber der eingestrahlten Energie abschirmt. Teilbereiche des Linsenrands werden nicht durch eine Begrenzung des Materials durch Formwände, sondern durch eine räumliche Begrenzung der die Polymerisation bzw. Vernetzung auslösenden Strahlung oder anderen Energie gebildet. Die Seitenwände der oberen Formhälfte sind ebenfalls mit der Maske 21 versehen, um zu verhindern, dass Ausgangsmaterial M, welches im Behälter 10 die Form umgibt, vernetzt wird.

Im Falle von UV-Licht kann die Maske vorzugsweise eine dünne Chrom-Schicht sein, die nach Verfahren hergestellt sein kann, wie sie z.B. in der Photo- bzw. UV-Lithographie bekannt sind. Als Maskenmaterial kommen eventuell auch andere Metalle oder Metalloxide in Frage. Die Maske kann auch mit einer Schutzschicht, im Falle von Quarz als Material für die Form bzw. Formhälfte beispielsweise aus Siliziumdioxid, überzogen sein. Die Maske braucht nicht unbedingt fest angeordnet zu sein, sie könnte beispielsweise auch abnehmbar oder auswechselbar ausgebildet bzw. angeordnet sein. Sie könnte prinzipiell überall an oder auf der Form vorgesehen sein, solange sie nur die ihr zugedachte Funktion, nämlich die Abschirmung aller unvernetztes Material führenden Formbereiche mit Ausnahme der Formkavität, erfüllen kann. Vorzugsweise ist die Maske an einer mit dem unvernetzten Ausgangsmaterial in Kontakt befindlichen Wandoberfläche oder knapp darunter angeordnet, da auf diese Weise unerwünschte Beugungs-und Streueffekte weitgehend ausgeschlossen werden können. Dies muss aber nicht so sein. Im Prinzip kann sogar auf eine Maske bzw. Maskierung in bzw. an der Form verzichtet werden, wenn es auf andere Weise gelingt, die Energiebeaufschlagung ggf. unter Berücksichtigung der optischen Wirkung der Form lokal auf die Formkavität zu beschränken. Im Falle von UV-Strahlung könnte dies z.B. durch eine räumlich begrenzte Lichtquelle, eine geeignete Linsenanordnung eventuell in Kombination mit externen Masken, Blenden oder dergleichen und unter Berücksichtigung der optischen Wirkung der Form erreicht werden.

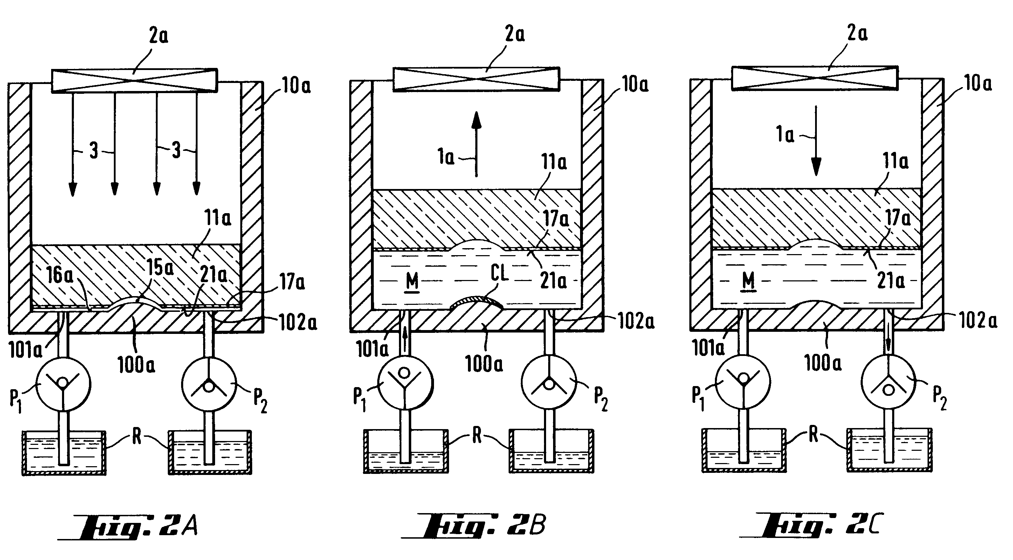

Ein weiteres Ausführungsbeispiel der erfindungsgemässen Vorrichtung ist in den Fig. 2A-C dargestellt. Bei diesem Ausführungsbeispiel ist die eine Formhälfte, hier die Vaterformhälfte, durch eine Wand eines Behälters 10a, hier durch den Behälterboden 100a, gebildet. Am Behälterboden 100a ist also die Vaterformhälfte direkt ausgebildet. In dem Behälter 10a ist ein ferner ein kolbenartig verschiebbares Formteil 11a vorgesehen, welches von der ihm gegenüberliegenden Behälterwand, hier dem Behälterboden 100a, weg und wieder auf den Behälterboden zu entlang der Seitenwände des Behälters dichtend bewegbar ist. Auf diese Weise kann also die Form geöffnet und geschlossen werden. Das Formteil 11a ist auf seiner dem Behälterboden zugewandten Fläche 17a entsprechend als Mutterformhälfte ausgebildet. Behälterboden 100a und Formfläche 17a definieren im geschlossenen Zustand der Form (Fig. 2A) die Formkavität 15a. Es ist selbstverständlich, dass das Formteil nicht unbedingt kolbenartig ausgebildet sein muss, ebensogut könnte auch eine Membran vorgesehen sein, an welcher die Formhälfte befestigt ist. Andere Formen der Volumenänderung sind ebenfalls denkbar.

In dem Behälter 10a, hier im Behälterboden 100a, ist ein Einlass 101a vorgesehen, durch den hinweg Ausgangsmaterial in den Raum zwischen das Formteil 11a und den Behälterboden 100a strömen kann. Der Raum zwischen dem Formteil 11a und dem Behälterboden 100a steht zu diesem Zweck ständig in Kontakt mit einem Reservoir R. Mit Hilfe von Pumpen P1 und P2 am Einlass 101a bzw. am Auslass 102a kann in den Raum zwischen Formteil 11a und Behälterboden 100a Ausgangsmaterial zugeführt bzw. abgeführt werden, wobei es wichtig ist, dass der Raum zwischen Formteil 11a und Behälterboden 100a stets mit Ausgangsmaterial M gefüllt ist, sodass keinerlei Luft in diesen Raum eindringen kann. Die Pumpen P1 und P2 sind mit einem integrierten Rückschlagventil dargestellt, es können aber auch Pumpen ohne integriertes Rückschlagventil verwendet werden und dieses kann gesondert zwischen Pumpe und Behälter geschaltet werden bzw. je nach Art der Pumpe kann auch ganz auf ein solches Rückschlagventil verzichtet werden.

Bei geschlossener Form (Fig. 2A) wird die Form mit Energie, hier wieder UV-Strahlung 3, beaufschlagt. Auch hier erfolgt beispielhaft die Beaufschlagung der Form mit Energie von oben. Dadurch wird die Vernetzung hervorgerufen. Anschliessend wird der vernetzte Formkörper CL von der Form abgehoben und aus der Form entfernt. Dazu wird zunächst mit Hilfe der Pumpe P1 durch den Einlass 101a flüssiges Ausgangsmaterial M in den Raum zwischen Behälterboden 100a und das Formteil 11a zugeführt, das kolbenartige Formteil 11a wird nach oben bewegt (Fig. 2B). Der Formkörper, hier in Form der Kontaktlinse CL, kann nun von der Form abgelöst und aus der Form entnommen werden. Dies kann beispielsweise mittels einer speziellen Greifeinrichtung erfolgen, wie dies schon anhand der Fig. 1 angedeutet worden ist. Die Kontaktlinse CL kann aber ebensogut aus der Form herausgespült werden, wie im folgenden noch genauer erläutert wird.

Das kolbenartig verschiebbare Formteil 11a wird anschliessend wieder abwärts bewegt und das zwischen dem Formteil 11a und dem Behälterboden 100a befindliche Material durch den Auslass 102a hindurch abgeführt (Fig. 2C). Das Abführen des Materials kann mittels der am Auslass vorgesehenen Pumpe P2 erfolgen.

Grundsätzlich ist es hier denkbar, dass das kolbenartig verschiebbare Formteil 11a nur durch das zwischen Formteil 11a und Behälterboden 100a zugeführte bzw. abgeführte flüssige Ausgangsmaterial angetrieben wird, sodass die Pumpen P1 und P2 die dafür notwendige Antriebsenergie bereitstellen. Es ist auch denkbar, dass gar keine Pumpen vorgesehen sind und das kolbenartig verschiebbare Formteil 11a mechanisch angetrieben wird, dass also bei der Aufwärtsbewegung Ausgangsmaterial angesaugt und bei der Abwärtsbewegung Ausgangsmaterial wieder herausgedrückt wird. Selbstverständlich sind auch Kombinationen mit Pumpen und einem mechanischen Antrieb möglich.

Auf dem Formteil 11a ist eine Maske 21a vorgesehen. Sie erstreckt sich, ähnlich wie bereits bei der oberen Formhälfte 11 in den Fig. 1A-C, über den Ringspalt 16a hinweg bis an die Formkavität 15a heran, sowie gegebenenfalls entlang den Seitenwänden des kolbenartig verschiebbaren Formteils 11a. Wird nun die Form mit UV-Strahlung 3 beaufschlagt, findet im Bereich der Formkavität 15a und nur dort eine Vernetzung und somit die Bildung des Formkörpers statt. Das Material in den übrigen Bereichen, insbesondere im Ringspalt 16a sowie anderes Ausgangsmaterial im Behälter 10a, werden nicht vernetzt. Für die Materialien sowie die Herstellung und Aufbringung solcher Masken gelten grundsätzlich die gleichen Betrachtungen, die schon anhand der Erläuterungen der Fig. 1A-C gemacht worden sind.

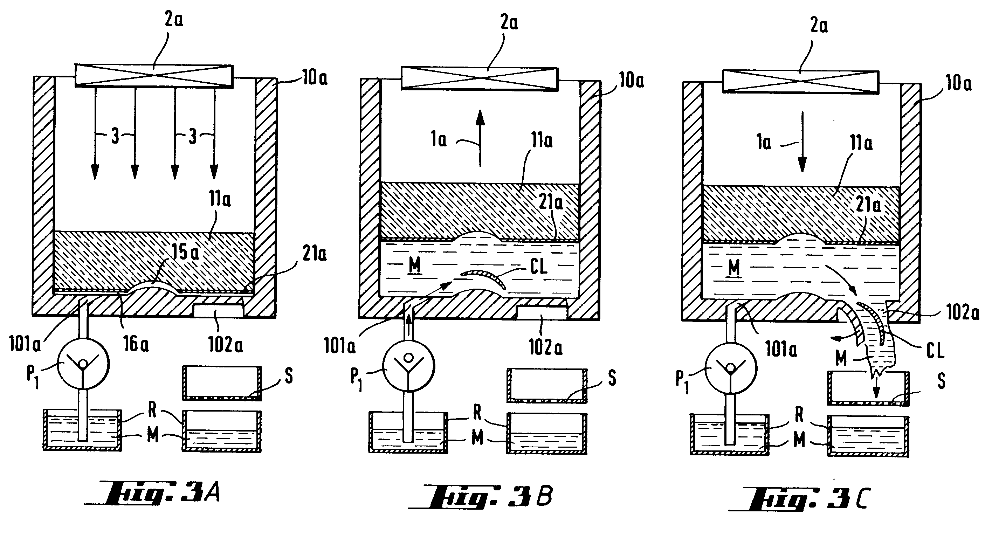

Die Fig. 3A-C zeigen ein Ausführungsbeispiel der Vorrichtung, welches im Prinzip dem Ausführungsbeispiel der Fig. 2A-C sehr ähnlich ist. Ein Unterschied ist jedoch, dass beim Ausführungsbeispiel gemäss Fig. 3A-C am Auslass 102a keine Pumpe P2 vorgesehen ist, sondern der Auslass 102a als verformbare Lasche bzw. Platte oder als Klappe ausgebildet ist. Bei der Erläuterung der Fig. 3A-C soll im folgenden vornehmlich auf das Entformen des Formkörpers, hier also der Kontaktlinse CL, eingegangen werden. Das Befüllen der Formkavität 15a erfolgt analog zu dem Ausführungsbeispiel gemäss Fig. 2A-C mittels der Pumpe P1. Ist die Form geschlossen (Fig. 3A), wird die Kontaktlinse CL durch Vernetzung mittels Beaufschlagung der Form mit UV-Strahlung 3 hergestellt.

Bei der Aufwärtsbewegung des kolbenartigen Formteils 11a (Fig. 3B) strömt flüssiges Ausgangsmaterial in den Behälter 10a zwischen den Behälterboden 100a und das kolbenartig verschiebbare Formteil 11a ein. Der Einlass 101a kann als Düse oder ähnlich wirkendes strömungserzeugendes Mittel ausgebildet sein. Beim Zuführen des flüssigen Ausgangsmaterials durch den Einlasss wird dann durch die erzeugte Strömung die vernetzte Kontaktlinse CL von der Form abgehoben und bei entsprechender Anordnung der Düse in Richtung zum Auslass 102a hin gespült. Dieser ist hier als verformbare Lasche bzw. Platte ausgebildet. Bei der Abwärtsbewegung des kolbenartigen Formteils 11a (Fig. 3C) wird durch den erzeugten Druck die Lasche nach unten verformt und gibt den Auslass 102a frei, sodass das flüssige Ausgangsmaterial mitsamt der Kontaktlinse CL durch den Auslass 102a herausgespült werden kann. Die Kontaktlinse kann in einem Sieb S aufgefangen werden, das für das flüssige Ausgangsmaterial durchlässig ist. Das Ausgangsmaterial kann beispielsweise rezykliert und wiederverwendet werden, gegebenenfalls nach einer Reinigung desselben. Während die Kontaktlinse herausgespült worden ist, ist die Formkavität 15a mit neuem Ausgangsmaterial befüllt worden, sodass durch Beaufschlagung mit UV-Strahlung 3 gleich eine neue Kontaktlinse CL vernetzt werden kann.

Vorstehend ist beschrieben, dass zum Abheben und Ausspülen flüssiges Ausgangsmaterial in den Behälter 10a zugeführt wird, im gleichen Zyklus die Formkavität 15a wieder befüllt und bei geschlossener Form zur Vernetzung und Herstellung der nächsten Kontaktlinse CL die Form wieder mit UV-Strahlung 3 beaufschlagt wird. Die Vorrichtung arbeitet also quasi als "Ein-Zyklus"-Vorrichtung. In jedem Zyklus (Auf- und Abwärtsbewegung des kolbenartigen Formteils 11a) wird nämlich eine Kontaktlinse hergestellt und aus der Form herausgespült.

Es ist aber auch denkbar, dass in einem ersten Zyklus ("Herstellungszyklus") die Herstellung der Kontaktlinse erfolgt, dass also das kolbenartige Formteil 11a aufwärts bewegt wird, flüssiges Ausgangsmaterial zwischen Formteil 11a und Behälterboden 100a strömt, und anschliessend das Formteil 11a wieder abwärts bewegt wird. Im geschlossenen Zustand wird die Form dann mit UV-Strahlung 3 beaufschlagt, wodurch eine Vernetzung erfolgt und damit die Kontaktlinse CL hergestellt wird. Nun kann in einem gesonderten zweiten Zyklus ("Spülzyklus") die Kontaktlinse aus der Form gespült werden, ohne dass in diesem zweiten Zyklus eine neue Kontaktlinse hergestellt wird, während bei der "Ein-Zyklus"-Vorrichtung wieder eine neue Kontaktlinse CL hergestellt wird. Zum Spülen kann daher bei der "Zwei-Zyklen"-Vorrichtung sowohl flüssiges Ausgangsmaterial verwendet werden, es kann aber insbesondere auch eine gesonderte Reinigungsflüssigkeit verwendet werden. Dies ist insofern von Vorteil, als dann während des Spülzyklus die Form von innen besonders gut gereinigt werden kann, bevor im nächsten Zyklus wieder Ausgangsmaterial einströmt und die nächste Kontaktlinse CL hergestellt wird. Bei dem Ausführungsbeispiel gemäss Fig. 3A-C ist also sowohl ein "Ein-Zyklus"-Betrieb (in jedem Zyklus wird eine Kontaktlinse hergestellt) als auch ein "Zwei-Zyklen"-Betrieb (im ersten Zyklus wird eine Kontaktlinse hergestellt, im zweiten Zyklus wird sie herausgespült und die Form gereinigt, ohne dass eine neue Kontaktlinse hergestellt wird) möglich.

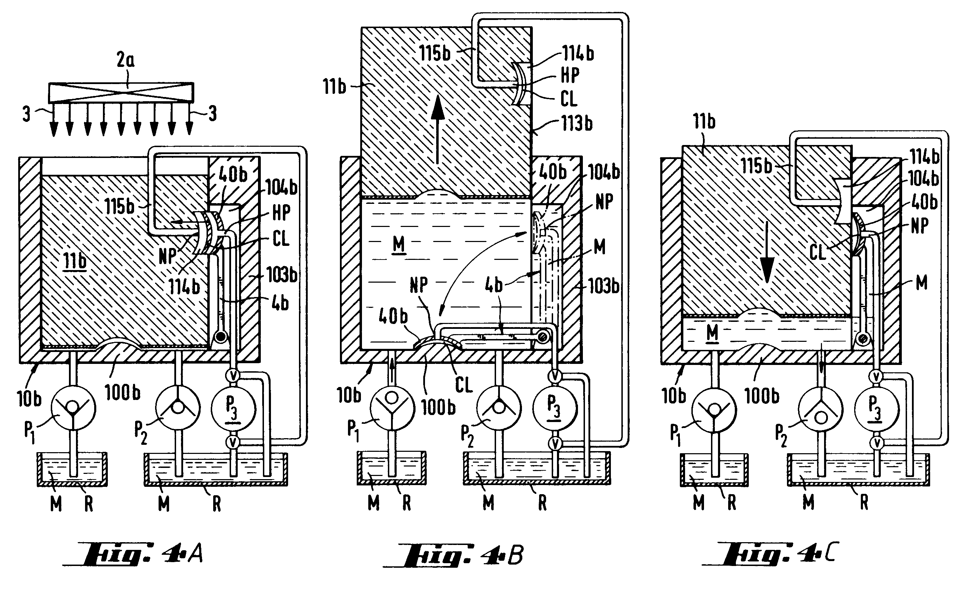

Ein weiteres Ausführungsbeispiel der erfindungsgemässen Vorrichtung ist in den Fig. 4A-C dargestellt. Dieses Ausführungsbeispiel ist im Prinzip auch ähnlich den anhand von Fig. 2A-C und Fig. 3A-C beschriebenen Ausführungsbeispielen, unterscheidet sich allerdings signifikant von diesen insofern, als es ein etwas anders ausgebildetes kolbenartig verschiebbares Formteil 11b umfasst. Ausserdem ist auch der Behälter 10b insofern signifikant anders ausgebildet, als in seiner einen Seitenwand 103b eine Ausbuchtung oder Nische 104b vorgesehen ist, die sich in Richtung der Bewegung des kolbenartigen Formteils 11b erstreckt. In dieser Nische 104b ist eine Greifeinrichtung 4b angeordnet. Das Formteil 11b weist auf seiner Aussenwand 113b genau in dem Bereich, in welchem die Nische 104b in der Seitenwand 103b des Behälters 11b vorgesehen ist, eine Einbuchtung 114b auf. Das Formteil 11b weist ferner einen Kanal 115b auf, der an eine Unterdruckquelle bzw. Überdruckquelle P3 anschliessbar ist. Die Greifeinrichtung 4b ist ebenfalls an diese Unterdruck- bzw. Überdruckquelle P3 anschliessbar.

Die Herstellung der Kontaktlinse CL durch Vernetzung mittels Beaufschlagung der Form mit UV-Strahlung 3 erfolgt wieder in der gleichen Art und Weise, wie dies schon anhand der Fig. 2A-C und der Fig. 3A-C beschrieben worden ist. Bei der Erläuterung der Fig. 4A-C soll daher vornehmlich auf die Art und Weise der Entformung der Kontaktlinse CL eingegangen werden. Bei geschlossener Form wird die Form wieder mit UV-Strahlung 3 beaufschlagt und durch Vernetzung die Kontaktlinse CL hergestellt (Fig. 4A). Anschliessend wird mittels der Pumpe P1 Ausgangsmaterial zwischen das Formteil 11b und den Behälterboden 100b gepumpt und das Formteil 11b nach oben bewegt (Fig. 4B). Nun wird die Greifeinrichtung 4b aus der Nische 104b heraus über die Kontaktlinse CL geschwenkt. Die Greifeinrichtung 4b weist in ihrem Greiferteller 40b eine Bohrung auf, durch die nun mittels der Unterdruckquelle P3 Unterdruck appliziert wird, so dass die Kontaktlinse CL abgehoben und gegen den Greiferteller 40b gesaugt wird. Ist die Kontaktlinse CL am Greiferteller 40b angesaugt, wird die Greifeinrichtung 4b wieder in die Nische 104b zurückgeschwenkt und das Formteil 11b wieder abwärts bewegt. Dabei wird das zwischen Formteil 11b und Behälterboden 100b befindliche flüssige Ausgangsmaterial mittels der Pumpe P2 abgesaugt (Fig. 4C).

Die in der Nische 104b befindliche Greifeinrichtung 4b gleitet dabei entweder an der Aussenwand 113b der Formteils 11b entlang oder wird in der Nische 104b gehalten, bis sich der Greiferteller 40b gegenüber der Einbuchtung 114b auf der Aussenwand des Formteils 11b befindet. Zu diesem Zeitpunkt wird durch die Bohrung im Greiferteller 40b Überdruck appliziert, so dass sich die Kontaktlinse CL vom Greiferteller 40b löst und in die Einbuchtung 114b abgelegt wird. Durch den zur Einbuchtung 114b führenden Kanal 115b wird nämlich zum gleichen Zeitpunkt, zu dem die Kontaktlinse CL vom Greiferteller 40b abgelöst wird, Unterdruck appliziert, so dass die Kontaktlinse CL vom Greiferteller 40b weg einfach in die Einbuchtung 114b hinein abgelegt wird (Fig. 4A).

Wenn das Formteil 11b nach oben bewegt worden ist, befindet sich die Einbuchtung 114b des Formteils 11b ausserhalb des Behälters 10b (Fig. 4B). Wird nun durch den Kanal 115b hindurch Überdruck appliziert, so löst sich die Kontaktlinse CL aus der Einbuchtung 114b heraus ab und kann der weiteren Verarbeitung zugeführt werden. Hierzu ist speziell zu bemerken, dass die Seitenwand 103b sich auch noch weiter nach oben erstrecken kann und eine weitere Nische aufweisen kann, in die hinein die Kontaktlinse CL abgelegt bzw. hineingespült werden kann. Dadurch wird eine noch bessere Führung der Formteils 11b und eine Schonung seiner entsprechenden dichtenden Flächen, die an der Behälterwand entlang gleiten, erreicht.

Zur Applikation von Überdruck oder Unterdruck ist in den Fig. 4A-C die Pumpe P3 vorgesehen, deren Überdruckanschluss HP bzw. Unterdruckanschluss NP je nach der Stellung des kolbenartig verschiebbaren Formteils mit dem Kanal 115b bzw. mit der Bohrung im Greiferteller 40b verbunden ist. Diese Pumpe P3 kann aus dem Reservoir R, in welchem Ausgangsmaterial bereitgestellt wird, Ausgangsmaterial ansaugen, mit dem der erforderliche Druck erzeugt wird. In den Fig. 4A-C sind am Einlass 101b und am Auslass 102b zwei getrennte Reservoirs dargestellt, in die die Pumpen P1 bzw. P2 und P3 hineinragen, es ist aber selbstverständlich, dass es auch möglich ist, dass es sich hierbei um ein und dasselbe Reservoir handelt.

Es soll an dieser Stelle noch angemerkt werden, dass auch das Ausführungsbeispiel gemäss Fig. 4A-C sowohl als "Ein-Zyklus"-Vorrichtung, wie auch als "Zwei-Zyklen"-Vorrichtung arbeiten kann. Allerdings muss bei der "Ein-Zyklus"-Vorrichtung gewährleistet sein, dass immer nur Ausgangsmaterial in den Behälter 10b einströmt. Bei der "Zwei-Zyklen"-Vorrichtung hingegen kann im zweiten Zyklus, in welchem dann auch die Kontaktlinse CL entnommen wird, eine Reinigungsflüssigkeit zugeführt werden.

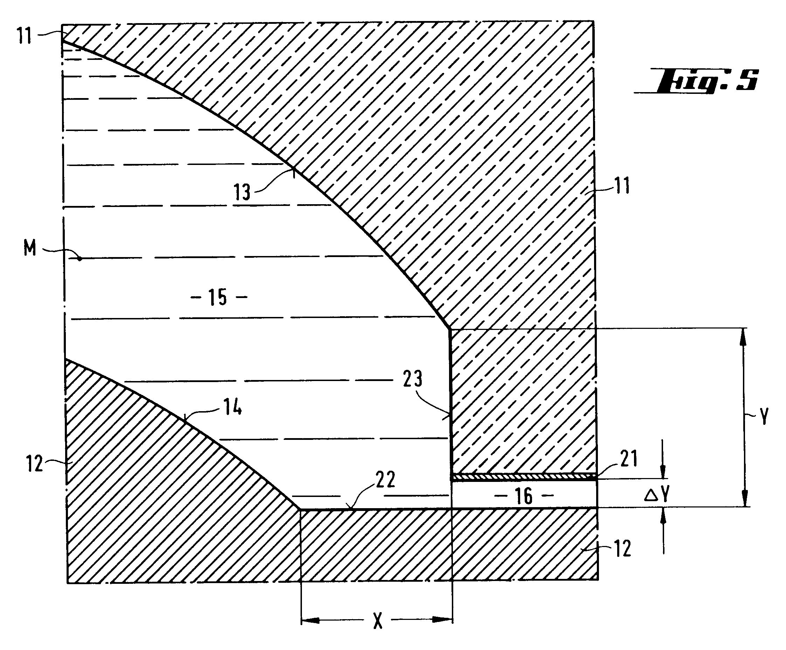

Wie bereits anhand der Erläuterung der einzelnen Figuren diskutiert, wird beim Schliessen der Formhälften überschüssiges Ausgangsmaterial in den Ringspalt 16 zwischen den beiden Formhälften verdrängt. Der in Fig. 5 besser erkennbare Ringspalt 16 wird so weit bzw. so hoch (Δy) gewählt, dass eine Berührung der beiden Formhälften 11 und 12 (bzw. eine Berührung des Formteils 11,11a,11b mit dem Behälterboden 100,100a,100b) im Bereich der Maske 21 mit Sicherheit zuverlässig vermieden wird. Die Positionierung (Abstandhaltung) der beiden Formhälften erfolgt durch die Distanzbolzen 19 (Fig. 1A-C).

Die Formkavität 15 hat in Fig. 5 im Sinne eines Beispiels eine Gestalt, die der typischen Randgeometrie einer sogenannten weichen Kontaktlinse entspricht. Der Kavitäts-und damit der Kontaktlinsenrand ist hier durch zwei rechtwinklig zu einander stehende Wandflächen 22 und 23 gebildet, die an der männlichen 12 bzw. weiblichen Formhälfte 11 ausgebildet sind. Die Breite und die Höhe dieser beiden Wandflächen bzw. der durch sie definierten Randbereiche der Kontaktlinse sind mit X bzw. Y bezeichnet. Selbstverständlich kann der Linsenrand in der Praxis auch etwas abgerundet sein.

Wie man deutlich erkennt, reicht die Wandfläche 23 der Formhälfte 11 nicht ganz bis and die Wandfläche 22 heran, sondern ist um den Betrag Δy des Ringspalts 16 weniger hoch. Typische Spalthöhen Δy liegen für die Herstellung von Kontaktlinsen im Bereich unterhalb von etwa 100 µm. Versuche haben gezeigt, dass wenigstens bei Verwendung von paralleler Energiestrahlung eine saubere Randstrukturierung des herzustellenden Formkörpers auch bei Spalthöhen von etwa 1 mm noch möglich ist. Umgekehrt ist es aber auch ohne weiteres möglich, die Weite bzw. Höhe des Ringspalts auf praktisch null zu reduzieren, wenn die Form nur kraftlos geschlossen wird, die beiden Formhälften also ohne äussere Belastung aufeinander liegen. Dabei bleibt zwischen den beiden Formhälften im Bereich des Ringspalts nur ein Film des unvernetzten Materials von wenigen Mikrometern Dicke, der aber wegen der Abschattung der UV-Strahlung ebenfalls nicht zur Bildung einer Schwimmhaut führen kann. Es entsteht so bei der Vernetzung ein sauberer und gratfreier Kontaktlinsenrand, der keinerlei mechanischer Nachbearbeitung bedarf. Wegen der kraftlosen Schliessung der Form wird diese zumindest bei geeigneter Materialwahl ebenfalls nicht beschädigt und kann so mehrfach verwendet werden.

Selbst wenn die Form aber unter Aufwendung von Kraft geschlossen und gegebenenfalls nur einmal verwendet wird, zeichnet sich die erfindungsgemässe Vorrichtung gegenüber bekannten Vorrichtungen immer noch dadurch aus, dass die Form im Ausgangsmaterial geschlossen wird und somit die Form schneller geschlossen werden kann, ohne dass das Risiko von Lufteinschlüssen gegeben ist.

Bei einseitiger Energie-Beaufschlagung kann die der Energie-Quelle abgewandte Formhälfte prizipiell aus jedem Material gefertigt sein, das sich mit dem vernetzbaren bzw. vernetzten Material bzw. Komponenten davon verträgt. Bei Verwendung von Metallen ist jedoch je nach Art der Energie-Strahlung mit potentiellen Reflexionen zu rechnen, welche eventuell zu nicht erwünschten Effekten wie Überbelichtung, Kantenverfälschung oder dergleichen führen können. Absorbierende Materialien weisen diese Nachteile nicht auf.

Prinzipiell ist es auch möglich, Beugungs- und/oder Streueffekte der die Form beaufschlagenden Strahlung gezielt zur Erzeugung einer gewollt unscharfen Kontur bzw. etwas abgerundeter Kanten des herzustellenden Formkörpers auszunutzen. Derselbe Effekt kann auch mit Masken örtlich variabler Durchlässigkeit erzielt werden. Scharfkantige Ränder der Formkörpers können so durch gezielte unvollständige Vernetzung und durch Anlösen der unvollständig vernetzten Bereiche mit einem geeigneten Lösungsmittel, das auch das unvernetzte Ausgangsmaterial selbst sein kann, gezielt abgerundet werden. Im Falle von HEMA (Hydroxyethylmethacrylat) als Ausgangsmaterial ist beispielsweise Isopropanol ein geeignetes Lösungsmittel.

Des weiteren ist es klar, dass die anhand der Figuren erläuterte Vorrichtung auch anstelle von nur einer Kavität auch mehrere Kavitäten umfassen kann, so dass mehrere Kontaktlinsen während eines Zyklus gleichzeitig hergestellt werden können. Diese Variante ist besonders effizient.
Ausserdem kann bei den Varianten mit dem kolbenartigen Formteil gezielt eine Durchflusssteuerung derart erfolgen, dass zunächst das kolbenartige Formteil mechanisch mit Kraft beaufschlagt wird und das Ausgangsmaterial beim Zuführen ein wenig verzögert in den Behälter freigegeben wird bzw. beim Abführen ein wenig verzögert aus dem Behälter hinaus freigegeben wird. Dies gilt auch für die Variante, bei der sowohl Pumpen verwendet und der Kolben mechanisch angetrieben wird. Mit dieser Massnahme kann beim Zuführen gezielt ein Unterdruck bzw. beim Abführen gezielt ein Überdruck in dem Behälter erzeugt werden bzw. der Druck im Behälter kann so generell beeinflusst werden.

Es ist ferner auch eine Variante denkbar, bei welcher die Anzahl der Zyklen, nach der jeweils eine neue Kontaktlinse hergestellt wird, variabel ist. Beispielsweise kann ein Sensor detektieren, ob eine Kontaktlinse aus der Form auch tatsächlich herausgespült worden ist und nur dann, wenn der Sensor eine solche herausgespülte Kontaktlinse detektiert hat, wird die Form vollständig geschlossen und eine neue Kontaktlinse wird hergestellt. Hat der Sensor keine herausgespülte Kontaktlinse detektiert, so wird die Form so lange weiter gespült, bis die Kontaktlinse aus der Form herausgespült worden ist.

Für die Kontaktlinse CL ist als Ausgangsmaterial, das durch Bestrahlung mit UV-Licht vernetzt werden kann, beispielsweise das für diese Zwecke vielfach verwendete HEMA (Hydroxyethylmethacrylat) oder poly-HEMA, insbesondere im Gemisch mit einem geeigneten Vernetzer wie beispielsweise Ethylenglykoldimethacrylat einsetzbar. Für andere Formkörper kommen je nach Einsatzzweck eventuell andere Materialien zur Anwendung, wobei für die Auslösung der Vernetzung je nach Art des vernetzbaren Materials grundsätzlich auch andere Energieformen, z.B. Elektronenstrahlung, Gamma-Strahlung, thermische Energie etc. möglich sind. Bei der Herstellung von Kontaktlinsen sind unter UV-Licht vernetzbare Materialien allgemein üblich, jedoch nicht zwingend.

Als Ausgangsmaterialien kommen besonders spezielle Präpolymere in Frage, und zwar insbesondere solche auf der Grundlage von Polyvinylalkohol, welche cyclische Acetalgruppen und vernetzbare Gruppen enthalten.

Kontaktlinsen auf der Grundlage von Polyvinylalkohol sind bereits bekannt. So werden z.B. in der EP 216,074 Kontaktlinsen offenbart, die Polyvinylalkohol enthalten, der über Urethangruppen gebundene (Meth)acryloylgruppen aufweist. In der EP 189,375 sind Kontaktlinsen aus mit Polyepoxiden vernetztem Polyvinylalkohol beschrieben.

Ferner sind auch einige spezielle Acetale bereits bekannt, die vernetzbare Gruppen enthalten. In diesem Zusammenhang wird beispielsweise auf die EP 201,693, auf die EP 215,245 und auf die EP 211,432 verwiesen. In der EP 201,693 werden unter anderem Acetale von unverzweigten Aldehyden mit 2 bis 11 Kohlenstoffatomen beschrieben, die endständig eine Aminogruppe tragen, welche Aminogruppe mit einem C₃-C₂₄-olefinisch ungesättigten organischen Radikal substituiert ist. Dieses organische Radikal weist eine Funktionalität auf, die vom Stickstoffatom Elektronen abzieht, ferner ist die olefinisch ungesättigte Funktionalität polymerisierbar. In der EP 201,693 werden auch Reaktionsprodukte von den vorstehend charakterisierten Acetalen mit einem 1,2-Diol, einem 1,3-Diol, einem Polyvinylalkohol oder einer Cellulose beansprucht. Jedoch sind derartige Produkte nicht konkret beschrieben.

Wenn eines der Acetale gemäss EP 201,693 überhaupt im Zusammenhang mit z.B. Polyvinylalkohol erwähnt wird, wie dies u.a. in Beispiel 17 jener Patentanmeldung der Fall ist, dann wird das über seine olefinische Gruppe polymerisierbare Acetal zuerst mit beispielsweise Vinylacetat copolymerisiert. Das so erhaltene Copolymer wird danach mit Polyvinylalkohol umgesetzt, und es wird eine 37 % Feststoffe enthaltende Emulsion mit einem pH von 5,43 und einer Viskosität von 11640 cps erhalten.

Demgegenüber enthalten gemäss einem Aspekt der vorliegenden Erfindung die Präpolymere ein 1,3-Diol-Grundgerüst, wobei ein gewisser Prozentsatz der 1,3-Diol-Einheiten zu einem 1,3-Dioxan modifiziert ist, das in 2-Position einen polymerisierbaren aber nicht polymerisierten Rest aufweist. Der polymerisierbare Rest ist insbesondere ein Aminoalkylrest, an dessen Stickstoffatom eine polymerisierbare Gruppe gebunden ist.

Bei dem verwendeten Präpolymer handelt es sich vorzugsweise um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel I enthält, 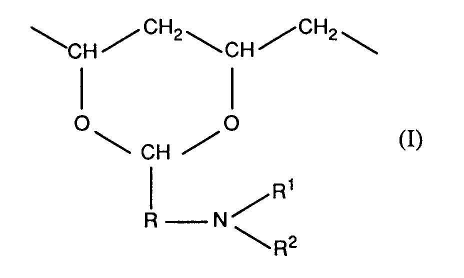 worin R für Niederalkylen mit bis zu 8 Kohlenstoffatomen steht, R¹ für Wasserstoff oder Niederalkyl steht und R² einen olefinisch ungesättigten, elektronenziehenden, copolymerisierbaren Rest mit vorzugsweise bis zu 25 Kohlenstoffatomen bedeutet.

R² steht beispielsweise für einen olefinisch ungesättigten Acylrest der Formel R³-CO-, worin R³ einen olefinisch ungesättigten copolymerisierbaren Rest mit 2 bis 24 Kohlenstoffatomen, bevorzugt mit 2 bis 8 Kohlenstoffatomen, besonders bevorzugt mit 2 bis 4 Kohlenstoffatomen, bedeutet. In einer anderen Ausführungsform steht der Rest R² für einen Rest der Formel II

-CO-NH-(R⁴-NH-CO-O)_{q}-R⁵-O-CO-R³ (II)

worin q für Null oder eins steht und R⁴ und R⁵ unabhängig voneinander Niederalkylen mit 2 bis 8 Kohlenstoffatomen, Arylen mit 6 bis 12 Kohlenstoffatomen, eine gesättigte bivalente cycloaliphatische Gruppe mit 6 bis 10 Kohlenstoffatomen, Arylenalkylen oder Alkylenarylen mit 7 bis 14 Kohlenstoffatomen oder Arylenalkylenarylen mit 13 bis 16 Kohlenstoffatomen bedeuten und worin R³ die vorstehend angegebene Bedeutung hat.

Bei dem Präpolymer handelt es sich daher insbesondere um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, 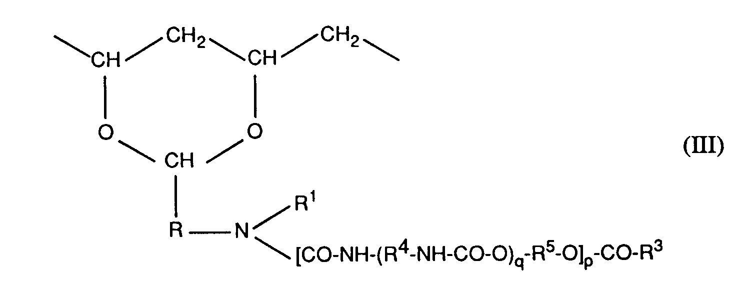 worin R für Niederalkylen steht, R¹ für Wasserstoff oder Niederalkyl steht, p den Wert Null oder eins aufweist, q den Wert Null oder eins aufweist, R³ einen olefinisch ungesättigten copolymerisierbaren Rest mit 2 bis 8 Kohlenstoffatomen bedeutet und R⁴ und R⁵ unabhängig voneinander Niederalkylen mit 2 bis 8 Kohlenstoffatomen, Arylen mit 6 bis 12 Kohlenstoffatomen, eine gesättigte bivalente cycloaliphatische Gruppe mit 6 bis 10 Kohlenstoffatomen, Arylenalkylen oder Alkylenarylen mit 7 bis 14 Kohlenstoffatomen oder Arylenalkylenarylen mit 13 bis 16 Kohlenstoffatomen bedeuten.

Niederalkylen R weist vorzugsweise bis zu 8 Kohlenstoffatome auf und kann geradkettig oder verzweigt sein. Geeignete Beispiele umfassen Octylen, Hexylen, Pentylen, Butylen, Propylen, Ethylen, Methylen, 2-Propylen, 2-Butylen oder 3-Pentylen. Vorzugsweise weist Niederalkylen R bis zu 6 und besonders bevorzugt bis zu 4 Kohlenstoffatome auf. Besonders bevorzugt sind die Bedeutungen Methylen und Butylen.

R¹ bedeutet vorzugsweise Wasserstoff oder Niederalkyl mit bis zu sieben, insbesondere bis zu vier Kohlenstoffatomen, insbesondere Wasserstoff.

Niederalkylen R⁴ oder R⁵ weist vorzugsweise 2 bis 6 Kohlenstoffatome auf und ist insbesondere geradkettig. Geeignete Beispiele umfassen Propylen, Butylen, Hexylen, Dimethylethylen und, besonders bevorzugt, Ethylen.

Arylen R⁴ oder R⁵ ist vorzugsweise Phenylen, das unsubstituiert oder durch Niederalkyl oder Niederalkoxy substituiert ist, insbesondere 1,3-Phenylen oder 1,4-Phenylen oder Methyl-1,4-phenylen.

Eine gesättigte bivalente cycloaliphatische Gruppe R⁴ oder R⁵ ist vorzugsweise Cyclohexylen oder Cyclohexylen-niederalkylen, z.B. Cyclohexylenmethylen, die unsubstituiert ist oder substituiert durch eine oder mehrere Methylgruppen, wie beispielsweise Trimethylcyclohexylenmethylen, z.B. der bivalente Isophoronrest.

Die Aryleneinheit von Alkylenarylen oder Arylenalkylen R⁴ oder R⁵ ist vorzugsweise Phenylen, unsubstituiert oder durch Niederalkyl oder Niederalkoxy substituiert, die Alkyleneinheit davon ist vorzugsweise Niederalkylen, wie Methylen oder Ethylen, insbesondere Methylen. Vorzugsweise sind derartige Reste R⁴ oder R⁵ daher Phenylenmethylen oder Methylenphenylen.

Arylenalkylenarylen R⁴ oder R⁵ ist vorzugsweise Phenylen-niederalkylen-phenylen mit bis zu 4 Kohlenstoffatomen in der Alkyleneinheit, z.B. Phenylenethylenphenylen.

Die Reste R⁴ und R⁵ bedeuten unabhängig voneinander vorzugsweise Niederalkylen mit 2 bis 6 Kohlenstoffatomen, Phenylen, unsubstituiert oder durch Niederalkyl substituiert, Cyclohexylen oder Cyclohexylen-niederalkylen, unsubstituiert oder durch Niederalkyl substituiert, Phenylen-niederalkylen, Niederalkylen-phenylen oder Phenylen-niederalkylen-phenylen.

Der Begriff "nieder" bedeutet im Rahmen dieser Erfindung im Zusammenhang mit Resten und Verbindungen, soweit er nicht abweichend definiert ist, Reste oder Verbindungen mit bis zu 7 Kohlenstoffatomen, vorzugsweise mit bis zu 4 Kohlenstoffatomen.

Niederalkyl weist insbesondere bis zu 7 Kohlenstoffatome auf, vorzugsweise bis zu 4 Kohlenstoffatome, und ist z.B. Methyl, Ethyl, Propyl, Butyl oder tert.-Butyl.

Niederalkoxy weist insbesondere bis zu 7 Kohlenstoffatome auf, vorzugsweise bis zu 4 Kohlenstoffatome, und ist z.B. Methoxy, Ethoxy, Propoxy, Butoxy oder tert.-Butoxy.

Der olefinisch ungesättigte copolymerisierbare Rest R³ mit 2 bis 24 Kohlenstoffatomen bedeutet vorzugsweise Alkenyl mit 2 bis 24 Kohlenstoffatomen, insbesondere Alkenyl mit 2 bis 8 Kohlenstoffatomen und besonders bevorzugt Alkenyl mit 2 bis 4 Kohlenstoffatomen, beispielsweise Ethenyl, 2-Propenyl, 3-Propenyl, 2-Butenyl, Hexenyl, Octenyl oder Dodecenyl. Bevorzugt sind die Bedeutungen Ethenyl und 2-Propenyl, so dass die Gruppe -CO-R³ für den Acylrest der Acrylsäure oder Methacrylsäure steht.

Die bivalente Gruppe -R⁴-NH-CO-O- ist vorhanden, wenn q für eins steht und abwesend, wenn q für Null steht. Präpolymere, in denen q für Null steht, sind bevorzugt.

Die bivalente Gruppe -CO-NH-(R⁴-NH-CO-O)_{q}-R⁵-O- ist vorhanden, wenn p für eins steht und abwesend, wenn p für Null steht. Präpolymere, in denen p für Null steht, sind bevorzugt.

In den Präpolymeren, in denen p für eins steht, bedeutet der Index q vorzugweise Null. Insbesondere sind Präpolymere bevorzugt, in denen p für eins steht, der Index q Null bedeutet und R⁵ für Niederalkylen steht.

Bei einem bevorzugten Präpolymer handelt es sich daher insbesondere um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, worin R für Niederalkylen mit bis zu 6 Kohlenstoffatomen steht, p Null bedeutet und R³ Alkenyl mit 2 bis 8 Kohlenstoffatomen bedeutet.

Bei einem weiteren bevorzugten Präpolymer handelt es sich daher insbesondere um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, worin R für Niederalkylen mit bis zu 6 Kohlenstoffatomen steht, p eins bedeutet, q Null bedeutet, R⁵ für Niederalkylen mit 2 bis 6 Kohlenstoffatomen steht und R³ Alkenyl mit 2 bis 8 Kohlenstoffatomen bedeutet.

Bei einem weiteren bevorzugten Präpolymer handelt es sich daher insbesondere um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, worin R für Niederalkylen mit bis zu 6 Kohlenstoffatomen steht, p eins bedeutet, q eins bedeutet, R⁴ für Niederalkylen mit 2 bis 6 Kohlenstoffatomen, Phenylen, unsubstituiert oder durch Niederalkyl substituiert, Cyclohexylen oder Cyclohexylen-niederalkylen, unsubstituiert oder durch Niederalkyl substituiert, Phenylen-niederalkylen, Niederalkylen-phenylen oder Phenylen-niederalkylen-phenylen steht, R⁵ für Niederalkylen mit 2 bis 6 Kohlenstoffatomen steht und R³ Alkenyl mit 2 bis 8 Kohlenstoffatomen bedeutet.

Die Präpolymere sind Derivate von Polyvinylalkohol mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, insbesondere etwa 1 bis 50 %, weiter bevorzugt etwa 1 bis 25 %, bevorzugt etwa 2 bis 15 % und besonders bevorzugt etwa 3 bis 10 %. Präpolymere, die zur Herstellung von Kontaktlinsen vorgesehen sind, enthalten insbesondere von etwa 0,5 bis etwa 25 %, bezogen auf Anzahl Hydroxylgruppen des Polyvinylalkohols, Einheiten der Formel III, insbesondere etwa 1 bis 15 % und besonders bevorzugt etwa 2 bis 12 %.

Polyvinylalkohole, die derivatisiert werden können, haben vorzugsweise ein Molekulargewicht von mindestens 10000. Als Obergrenze können die Polyvinylalkohole ein Molekulargewicht von bis zu 1000000 aufweisen. Vorzugsweise haben die Polyvinylalkohole ein Molekulargewicht von bis zu 300000, insbesondere von bis zu etwa 100000 und ganz besonders bevorzugt von bis zu etwa 50000.

Ueblicherweise weisen geeignete Polyvinylalkohole hauptsächlich eine Poly(2-hydroxy)ethylen - Struktur auf. Die derivatisierten Polyvinylalkohole können jedoch auch Hydroxygruppen in Form von 1,2-Glykolen aufweisen, wie Copolymereinheiten von 1,2-Dihydroxyethylen, wie sie beispielsweise durch alkalische Hydrolyse von Vinylacetat-Vinylencarbonat-Copolymeren erhalten werden können.

Darüber hinaus können die derivatisierten Polyvinylalkohole auch geringe Anteile, beispielsweise bis zu 20 %, vorzugsweise bis zu 5 %, von Copolymereinheiten von Ethylen, Propylen, Acrylamid, Methacrylamid, Dimethacrylamid, Hydroxyethylmethacrylat, Methylmethacrylat, Methylacrylat, Ethylacrylat, Vinylpyrrolidon, Hydroxyethylacrylat, Allylalkohol, Styrol oder ähnlichen üblicherweise verwendeten Comonomeren enthalten.

Es können handelsübliche Polyvinylalkohole verwendet werden, wie z.B. Vinol® 107 der Firma Air Products (MW = 22000 bis 31000, 98 - 98,8 % hydrolysiert), Polysciences 4397 (MW = 25000, 98,5 % hydrolysiert), BF 14 von Chan Chun, Elvanol® 90 - 50 von DuPont, UF-120 von Unitika, Moviol® 4-88, 10-98 und 20-98 von Hoechst. Andere Hersteller sind z.B. Nippon Gohsei (Gohsenol®), Monsanto (Gelvatol®), Wacker (Polyviol®) oder die japanischen Hersteller Kuraray, Denki und Shin-Etsu.

Wie bereits erwähnt, können auch Copolymere von hydrolysiertem Vinylacetat verwendet werden, die beispielsweise als hydrolysiertes Ethylen-vinylacetat (EVA) erhältlich sind, oder Vinylchlorid-Vinylacetat, N-Vinylpyrrolidon-Vinylacetat und Maleinsäureanhydrid-Vinylacetat.

Polyvinylalkohol wird üblicherweise durch Hydrolyse des entsprechenden homopolymeren Polyvinylacetat hergestellt. In einer bevorzugten Ausführungsform enthält der derivatisierte Polyvinylalkohol weniger als 50 % Polyvinylacetat-Einheiten, insbesondere weniger als 20 % Polyvinylacetat-Einheiten.

Die Verbindungen enthaltend Einheiten der Formel III können auf an sich bekannte Weise hergestellt werden. Beispielsweise kann ein Polyvinylalkohol mit einem Molekulargewicht von mindestens etwa 2000, der Einheiten der Formel IV enthält

-CH(OH)-CH₂- (IV)

mit etwa 0,5 bis 80 %, bezogen auf die Anzahl von Hydroxylgruppen der Verbindung der Formel IV, zu einer Verbindung der Formel (V) 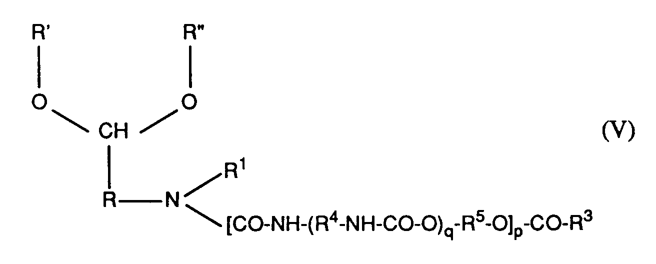 worin R' und R'' unabhängig voneinander Wasserstoff, Niederalkyl oder Niederalkanoyl, wie Acetyl oder Propionyl, bedeuten und die anderen Variablen die für Formel III angegebene Bedeutung aufweisen, umgesetzt werden, insbesondere in saurem Medium.

Alternativ dazu kann ein Polyvinylalkohol mit einem Molekulargewicht von mindestens etwa 2000, der Einheiten der Formel IV enthält mit einer Verbindung der Formel VI 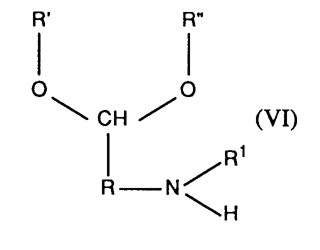 umgesetzt werden, worin die Variablen wie für die Verbindung der Formel V definiert sind, insbesondere unter sauren Bedingungen, und das auf diese Weise erhältliche cyclische Acetal anschliessend mit einer Verbindung der Formel VII umgesetzt werden

OCN-(R⁴-NH-CO-O)_{q}-R⁵-O-CO-R³ (VII)

worin die Variablen wie für die Verbindung der Formel V definiert sind.

Alternativ dazu kann das Reaktionsprodukt aus einer Verbindung der Formel IV und einer Verbindung der Formel VI wie vorstehend beschrieben erhältliche Produkt mit einer Verbindung der Formel (VIII)

X-CO-R³ (VIII)

umgesetzt werden, worin R³ z.B. Alkenyl mit 2 bis 8 Kohlenstoffatomen bedeutet und X für eine reaktionsfähige Gruppe steht, z.B. für verethertes oder verestertes Hydroxy, z.B. für Halogen, insbesondere für Chlor.

Verbindungen der Formel V, in denen p für Null steht, sind z.B. aus der EP 201,693 bekannt. Auch Verbindungen der Formel VI sind dort beschrieben. Verbindungen der Formel VII sind an sich bekannt oder lassen sich auf an sich bekannte Weise herstellen. Ein Beispiel für eine Verbindung der Formel VII, in der q für Null steht, ist Isocyanatoethylmethacrylat. Ein Beispiel für eine Verbindung der Formel VII, in der q für eins steht, ist das Reaktionsprodukt von Isophorondiisocyanat mit 0,5 Aequivalenten Hydroxyethylmethacrylat. Verbindungen der Formel VIII sind an sich bekannt, ein typischer Vertreter ist das Methacryloylchlorid. Verbindungen der Formel V, in denen p und / oder q für 1 stehen, lassen sich aus den vorstehend erwähnten Verbindungen auf an sich bekannte Weise herstellen, z.B. durch Umsetzung einer Verbindung der Formel VI mit Isocyanatoethylmethacrylat oder durch Umsetzung einer Verbindung der Formel VI mit Isophorondiisocyanat, das zuvor mit 0,5 Aequivalenten Hydroxyethylmethacrylat terminiert wurde.

Ueberraschenderweise sind die Präpolymere der Formel I bzw. III ausserordentlich stabil. Dies ist für den Fachmann unerwartet, weil beispielsweise höherfunktionelle Acrylate üblicherweise stabilisiert werden müssen. Werden derartige Verbindungen nicht stabilisiert, tritt üblicherweise rasche Polymerisation ein. Eine spontane Vernetzung durch Homopolymerisation findet jedoch mit den Präpolymeren nicht statt. Die Präpolymere der Formel I bzw. III lassen sich darüber hinaus auf an sich bekannte Weise reinigen, beispielsweise durch Fällen mit Aceton, Dialyse oder Ultrafiltration, wobei die Ultrafiltration besonders bevorzugt ist. Durch diesen Reinigungsvorgang können die Präpolymere der Formel I bzw. III in äusserst reiner Form, z.B. als aufkonzentrierte wässrige Lösungen erhalten werden, die frei oder zumindest im wesentlichen frei sind von Reaktionsprodukten, wie Salzen, und von Ausgangsstoffen, wie z.B. Verbindungen der Formel V oder anderen nicht-polymeren Bestandteilen.

Das bevorzugte Reinigungsverfahren der Präpolymere, eine Ultrafiltration, kann auf an sich bekannte Weise durchgeführt werden. Dabei besteht die Möglichkeit, die Ultrafiltration wiederholt durchzuführen, beispielsweise zwei-bis zehnmal. Alternativ dazu kann die Ultrafiltration auch kontinuierlich durchgeführt werden, bis der gewünschte Reinheitsgrad erreicht ist. Der gewünschte Reinheitsgrad kann grundsätzlich beliebig hoch gewählt werden. Ein geeignetes Mass für den Reinheitsgrad ist z.B. der Kochsalzgehalt der Lösung, der sich auf bekannte Weise einfach ermitteln lässt.

Die Präpolymere der Formel I bzw. III sind andererseits auf äusserst effektive Weise und gezielt vernetzbar, insbesondere durch Photovernetzung.

Bei der Photovernetzung wird geeigneterweise ein Photoinitiator zugesetzt, der eine radikalische Vernetzung initiieren kann. Beispiele hierfür sind dem Fachmann geläufig, speziell können als geeignete Photoinitiatoren Benzoinmethylether, 1-Hydroxycyclohexylphenylketon, Daracure 1173 oder Irgacure-Typen genannt werden. Die Vernetzung kann dann durch aktinische Strahlung, wie z.B. UV-Licht, oder ionisierende Strahlung, wie z.B. Gammastrahlung oder Röntgenstrahlung, ausgelöst werden.

Die Photopolymerisation wird geeigneterweise in einem Lösungsmittel durchgeführt. Als Lösungsmittel sind grundsätzlich alle Lösungsmittel geeignet, die Polyvinylalkohol und die gegebenenfalls zusätzlich verwendeten vinylischen Comonomere lösen, z.B. Wasser, Alkohole wie Niederalkanole, z.B. Ethanol oder Methanol, ferner Carbonsäureamide, wie Dimethylformamid, oder Dimethylsulfoxid, ebenso Gemische von geeigneten Lösungsmitteln, wie z.B. Gemische von Wasser mit einem Alkohol, wie z.B. ein Wasser/Ethanol- oder ein Wasser / Methanol-Gemisch.

Die Photovernetzung erfolgt vorzugsweise unmittelbar aus einer wässrigen Lösung der Präpolymere heraus, die als Resultat des bevorzugten Reinigungsschrittes, einer Ultrafiltration, erhalten werden kann, gegebenenfalls nach Zusatz eines zusätzlichen vinylischen Comonomeren. Beispielsweise kann die Photovernetzung einer etwa 15 bis 40 %-igen wässrigen Lösung vorgenommen werden.

Das Verfahren zur Herstellung der Polymere lässt sich beispielsweise dadurch charakterisieren, dass man ein Präpolymer enthaltend Einheiten der Formel I bzw. III, insbesondere in im wesentlichen reiner Form, d.h. zum Beispiel nach ein-oder mehrmaliger Ultrafiltration, vorzugsweise in Lösung, insbesondere in wässriger Lösung, in Abwesenheit oder Anwesenheit eines zusätzlichen vinylischen Comonomeren, photovernetzt.

Das vinylische Comonomer, das erfindungsgemäss bei der Photovernetzung zusätzlich verwendet werden kann, kann hydrophil, hydrophob oder ein Gemisch eines hydrophoben und eines hydrophilen vinylischen Monomeren sein. Geeignete vinylische Monomere umfassen insbesondere diejenigen, die üblicherweise bei der Herstellung von Kontaktlinsen verwendet werden. Unter einem hydrophilen vinylischen Monomeren wird ein Monomer verstanden, das als Homopolymer typischerweise ein Polymer ergibt, das wasserlöslich ist oder mindestens 10 Gewichtsprozent Wasser absorbieren kann. Analog wird unter einem hydrophoben vinylischen Monomeren ein Monomer verstanden, das als Homopolymer typischerweise ein Polymer ergibt, das wasserunlöslich ist und weniger als 10 Gewichtsprozent Wasser absorbieren kann.

Im allgemeinen reagieren zwischen etwa 0,01 und 80 Einheiten eines typischen vinylischen Comonomeren pro Einheit der Formel I bzw. III.

Falls ein vinylisches Comonomer verwendet wird, enthalten die vernetzten Polymere vorzugsweise zwischen etwa 1 und 15 Prozent, besonders bevorzugt zwischen etwa 3 und 8 Prozent, Einheiten der Formel I bzw. III, bezogen auf die Anzahl von Hydroxylgruppen des Polyvinylalkohols, die mit etwa 0.1 bis 80 Einheiten des vinylischen Monomeren umgesetzt werden.

Der Anteil der vinylischen Comonomere, falls diese verwendet werden, beträgt vorzugsweise 0,5 bis 80 Einheiten pro Einheit der Formel I, insbesondere 1 bis 30 Einheiten vinylisches Comonomer pro Einheit der Formel I und besonders bevorzugt 5 bis 20 Einheiten pro Einheit der Formel I.

Es ist ferner bevorzugt, ein hydrophobes vinylisches Comonomer zu verwenden oder ein Gemisch eines hydrophoben vinylischen Comonomeren mit einem hydrophilen vinylischen Comonomeren, wobei dieses Gemisch wenigstens 50 Gewichtsprozent eines hydrophoben vinylischen Comonomeren enthält. Auf diese Weise lassen sich die mechanischen Eigenschaften des Polymeren verbessern, ohne dass der Wassergehalt wesentlich absinkt. Grundsätzlich gilt jedoch, dass sowohl konventionelle hydrophobe vinylische Comonomere als auch konventionelle hydrophile vinylische Comonomere für die Copolymerisation mit Polyvinylalkohol enthaltend Gruppen der Formel I geeignet sind.

Geeignete hydrophobe vinylische Comonomere umfassen, ohne dass diese Aufzählung abschliessend wäre, C₁-C₁₈-Alkylacrylate und -methacrylate, C₃-C₁₈-Alkylacrylamide und -methacrylamide, Acrylnitril, Methacrylnitril, Vinyl-C₁-C₁₈-alkanoate, C₂-C₁₈-Alkene, C₂-C₁₈-Haloalkene, Styrol, C₁-C₆-Alkylstyrol, Vinylalkylether, in denen der Alkylteil 1 bis 6 Kohlenstoffatome aufweist, C₂-C₁₀-Perfluoralkyl-acrylate und -methacrylate oder entsprechend partiell fluorierte Acrylate und Methacrylate, C₃-C₁₂-Perfluoralkyl-ethylthiocarbonylaminoethyl-acrylate und -methacrylate, Acryloxy und Methacryloxy-alkylsiloxane, N-Vinylcarbazol, C₁-C₁₂-Alkylester der Maleinsäure, Fumarsäure, Itaconsäure, Mesaconsäure und dergleichen. Bevorzugt sind z.B. C₁-C₄-Alkylester von vinylisch ungesättigten Carbonsäuren mit 3 bis 5 Kohlenstoffatomen oder Vinylester von Carbonsäuren mit bis zu 5 Kohlenstoffatomen.

Beispiele geeigneter hydrophober vinylischer Comonomere umfassen Methylacrylat, Ethylacrylat, Propylacrylat, Isopropylacrylat, Cyclohexylacrylat, 2-Ethylhexylacrylat, Methylmethacrylat, Ethylmethacrylat, Propylmethacrylat, Vinylacetat, Vinylpropionat, Vinylburyrat, Vinylvalerat, Styrol, Chloropren, Vinylchlorid, Vinylidenchlorid, Acrylnitril, 1-Buten, Butadien, Methacrylnitril, Vinyltoluol, Vinylethylether, Perfluorhexylethylthiocarbonylaminoethylmethacrylat, Isobornylmethacrylat, Trifluorethylmethacrylat, Hexafluorisopropylmethacrylat, Hexafluorbutylmethacrylat, Tris-trimethylsilyloxy-silylpropylmethacrylat, 3-Methacryloxypropylpentamethyldisiloxan und Bis(methacryloxypropyl)tetramethyldisiloxan.

Geeignete hydrophile vinylische Comonomere umfassen, ohne dass diese Aufzählung abschliessend wäre, durch Hydroxy substituierte Niederalkylacrylate und -methacrylate, Acrylamid, Methacrylamid, Niederalkylacrylamide und -methacrylamide, ethoxylierte Acrylate und Methacrylate, durch Hydroxy substituierte Niederalkylacrylamide und Methacrylamide, durch Hydroxy substituierte Niederalkylvinylether, Natriumethylensulfonat, Natriumstyrolsulfonat, 2-Acrylamido-2-methylpropansulfonsäure, N-Vinylpyrrol, N-Vinylsuccinimid, N-Vinylpyrrolidon, 2- oder 4-Vinylpyridin, Acrylsäure, Methacrylsäure, Amino- (wobei der Begriff"Amino" auch quaternäres Ammonium umfasst), Mononiederalkylamino-oder Diniederalkylamino-niederalkylacrylate und -methacrylate, Allylalkohol und dergleichen. Bevorzugt sind z.B. durch Hydroxy substituierte C₂-C₄-Alkyl(meth)acrylate, fünf- bis siebengliedrige N-Vinyllactame, N,N-Di-C₁-C₄-alkyl(meth)acrylamide und vinylisch ungesättigte Carbonsäuren mit insgesamt 3 bis 5 Kohlenstoffatomen.

Beispiele geeigneter hydrophiler vinylischer Comonomere umfassen Hydroxyethylmethacrylat, Hydroxyethylacrylat, Acrylamid, Methacrylamid, Dimethylacrylamid, Allylalkohol, Vinylpyridin, Vinylpyrrolidon, Glycerinmethacrylat, N-(1,1-Dimethyl-3-oxobutyl)acrylamid, und dergleichen.

Bevorzugte hydrophobe vinylische Comonomere sind Methylmethacrylat und Vinylacetat.

Bevorzugte hydrophile vinylische Comonomere sind 2-Hydroxyethylmethacrylat, N-Vinylpyrrolidon und Acrylamid.

In den nachfolgenden Beispielen sind Mengenangeben, falls nicht ausdrücklich anders angegeben, Gewichtsangaben, Temperaturen werden in Grad Celsius angegeben. Die Beispiele sind nicht geeignet, die Erfindung in irgendeiner Weise, beispielsweise auf den Umfang der Beispiele, zu beschränken.

Beispiel 1a): Zu 105,14 Teilen Aminoacetaldehyd-dimethylacetal und 101,2 Teilen Triethylamin in 200 Teilen Dichlormethan werden unter Eiskühlung 104,5 Teile Methacryloylchlorid, gelöst in 105 Teilen Dichlormethan, bei maximal 15°C während 4 Stunden zugetropft. Nach beendeter Reaktion wird die Dichlormethanphase mit 200 Teilen Wasser, dann mit 200 Teilen 1N HCl-Lösung, dann zweimal mit 200 Teilen Wasser gewaschen. Nach Trocknen mit wasserfreiem Magnesiumsulfat wird die Dichlormethanphase eingedampft und mit 0,1 %, bezogen auf das Reaktionsprodukt, 2,6-Di-tert.-butyl-p-kresol stabilisiert. Nach Destillation bei 90°C/10⁻³ mbar erhält man 112 g Methacrylamidoacetaldehyd-dimethylacetal als farblose Flüssigkeit, Siedepunkt 92°C/10⁻³ mbar (65 % Ausbeute).

Beispiel 1b): 52,6 g Aminoacetaldehyd-dimethylacetal werden in 150 ml deionisiertem Wasser gelöst und unter Eiskühlung auf 5°C abgekühlt. Anschliessend werden gleichzeitig 50 ml Methacrylsäurechlorid und 50 ml 30 %-ige Natronlauge während 40 Minuten so zugegeben, dass der pH-Wert bei 10 bleibt und die Temperatur nicht über 20°C steigt. Nach beendeter Zugabe wird mittels Gaschromatographie der verbliebene Gehalt an Aminoacetaldehyd-dimethylacetal zu 0,18 % bestimmt. Durch weitere Zugabe von 2,2 ml Methacrylsäurechlorid und 2,0 ml 30 %-ige Natronlauge wird das Amin vollständig umgesetzt. Anschliessend wird die Lösung mit 1N Salzsäure neutralisiert (pH = 7). Die wässrige Phase wird mit 50 ml Petrolether extrahiert und mit Wasser gewaschen. Die Petroletherphase enthält 3,4 g Nebenprodukt. Die Wasserphasen werden vereinigt und ergeben 402,8 g einer 20,6 %-igen Lösung von Methacrylamidoacetaldehyd-dimethylacetal. Das Produkt ist gemäss Gaschromatogramm 98,2 %-ig.

Beispiel 2: 10 Teile Polyvinylalkohol mit einem Molekulargewicht von 22'000 und einem Verseifungsgrad von 97,5 - 99,5 % werden in 90 Teilen Wasser gelöst, mit 2,5 Teilen Methacrylamidoacetaldehyd-dimethylacetal versetzt und mit 10 Teilen konzentrierter Salzsäure angesäuert. Die Lösung wird mit 0,02 Teilen 2,6-Di-tert.-butyl-p-kresol stabilisiert. Nach 20-stündigem Rühren bei Raumtemperatur wird die Lösung mit 10 %-iger Natronlauge auf pH 7 eingestellt und dann siebenmal über eine 3kD-Membran ultrafiltriert (Verhältnis 1:3). Nach Einengen erhält man eine 18.8 %-ige wässrige Lösung von Methacrylamidoacetaldehydo-1,3-acetal von Polyvinylalkohol mit einer Viskosität von 2240 cP bei 25 °C.

Beispiel 3: 10 Teile der gemäss Beispiel 2 erhaltenen Lösung des Methacrylamidoacetaldehydo-1,3-acetals von Polyvinylalkohol werden photochemisch vernetzt, indem sie mit 0,034 Teilen Darocure 1173 (CIBA-GEIGY) versetzt werden. Dieses Gemisch wird als 100 Mikron dicke Schicht zwischen zwei Glasplatten mit 200 Impulsen eines 5000 Watt Belichtungsgerätes der Firma Staub belichtet. Es resultiert eine feste transparente Folie mit einem Feststoffgehalt von 31 %.

Beispiel 4: 110 g Polyvinylalkohol (Moviol 4-88, Hoechst) werden in 440 g deionisiertem Wasser bei 90°C gelöst und auf 22°C abgekühlt. 100,15 g einer 20,6 %-igen wässrigen Lösung von Methacrylamidoacetaldehyd-dimethylacetal, 38,5 g konz. Salzsäure (37 % p.a., Merck) und 44,7 g deionisiertes Wasser werden dazugegeben. Die Mischung wird bei Raumtemperatur während 22 Stunden gerührt und dann mit einer 5 %-igen NaOH-Lösung auf pH = 7,0 eingestellt. Die Lösung wird mit deionisiertem Wasser auf 3 Liter verdünnt, filtriert und durch eine 1-KD-Omega-Membran der Firma Filtron ultrafiltriert. Nachdem das dreifache Probenvolumen permeiert hat, wird die Lösung aufkonzentriert. Man erhält 660 g einer 17,9 %-igen Lösung des Methacrylamidoacetaldehydo-1,3-acetals von Polyvinylalkohol mit einer Viskosität von 210 cp. Die inhärente Viskosität des Polymeren beträgt 0,319. Der Stickstoffgehalt beträgt 0,96 %. Gemäss NMR-Untersuchung sind 11 Mol-% der OH-Gruppen acetalisiert und 5 Mol-% der OH-Gruppen acetyliert. Durch Aufkonzentrieren der wässrigen Polymerlösung unter reduziertem Druck und Luftzug erhält man eine 30,8 %-ige Lösung mit einer Viskosität von 3699 cp.

Beispiel 5: 133,3 g einer 15 %-igen Polyvinylalkohollösung (Moviol 4-88, Hoechst) werden mit 66,6 g deionisiertem Wasser, 3,3 g monomerem 4-Methacrylamidobutyraldehyddiethylacetal und 20,0 g konz. Salzsäure (37 % p.a., Merck) versetzt und bei Raumtemperatur 8 Stunden gerührt. Die Lösung wird anschliessend mit 5 %-iger Natronlauge auf pH = 7 eingestellt. Nach Ultrafiltration dieser Lösung über eine 3 KD-Omega-Membran der Firma Filtron, wobei der Natriumchloridgehalt der Polymerlösung von 2,07 % auf 0,04 % reduziert wird, resultiert eine 20 %-ige Polymerlösung des Methacrylamidobutyraldehydo-1,3-acetals von Polyvinylalkohol mit einer Viskosität von 400 cp. Die inhärente Viskosität des Polymeren beträgt 0,332. Der Stickstoffgehalt beträgt 0,41 %. Gemäss NMR-Untersuchung sind 7,5 Mol-% der OH-Gruppen mit Acetalgruppen beladen, und 7,3 Mol-% der OH-Gruppen sind mit Acetatgruppen beladen.

Beispiel 6: 200 g einer 10 %-igen Polyvinylalkohollösung (Moviol 4-88, Hoechst) werden mit 2,4 g (14,8 mmol) Aminobutyraldehyd-diethylacetal (Fluka) und 20 g konz. Salzsäure (37 % p.a., Merck) versetzt. Die Lösung wird während 48 Stunden bei Raumtemperatur gerührt und anschliessend mit 10 %-iger Natronlauge neutralisiert. Die Lösung wird auf 400 ml verdünnt. 200 ml dieser Lösung werden gemäss Beispiel 7 weiter verarbeitet. Die übrigen 200 ml dieser Lösung werden mit 0,85 g (8,1 mmol) Methacrylsäurechlorid (Fluka) versetzt, und der pH-Wert wird mit 2N Natronlauge auf pH = 10 gehalten. Nach 30 Minuten bei Raumtemperatur wird der pH auf 7,0 eingestellt und die Lösung über eine 3-KD-Omega-Membran der Firma Filtron analog Beispiel 5 gereinigt. Nach Aufkonzentrieren resultiert eine 27,6 %-ige Polymerlösung des Methacrylamidobutyraldehydo-1,3-acetals von Polyvinylalkohol mit einer Viskosität von 2920 cp. Die inhärente Viskosität des Polymeren beträgt 0,435. Der Stickstoffgehalt beträgt 0,59 %.

Beispiel 7: 200 ml der Polymerlösung von Beispiel 6 werden mit 1,3 g (8,5 mmol) 2-Isocyanatoethylmethacrylat versetzt, und mit 2N Natronlauge wird der pH-Wert auf 10 gehalten. Nach 15 Minuten bei Raumtemperatur wird die Lösung mit 2N Salzsäure neutralisiert und analog wie in Beispiel 6 ultrafiltriert. Nach Konzentrieren resultiert eine 27,1 %-ige Polymerlösung des 4-(2-Methacryloylethyl-ureido)butyraldehydo-1,3-acetals von Polyvinylalkohol mit einer Viskosität von 2320 cp. Die inhärente Viskosität des Polymeren beträgt 0,390. Der Stickstoffgehalt beträgt 1,9 %.

Beispiel 8: Die 30,8 %-ige Polymerlösung gemäss Beispiel 4 mit einer Viskosität von etwa 3600 cp wird mit 0,7 % Darocur 1173 (bezogen auf den Gehalt an Polymer) versetzt. Die Lösung wird in eine transparente Kontaktlinsenform aus Polypropylen gefüllt, die Form wird geschlossen. Mittels einer 200 Watt Oriel UV-Lampe wird die Lösung während 6 Sekunden aus einem Abstand von 18 cm belichtet. Die Form wird geöffnet, und die fertige Kontaktlinse kann entfernt werden. Die Kontaktlinse ist transparent und weist einen Wassergehalt von 61 % auf. Der Modulus beträgt 0,9 mPa, die Bruchdehnung 50 %. Die Kontaktlinse wird bei 121 °C während 40 Minuten autoklaviert. An einer so behandelten Kontaktlinsen können keine Formveränderungen nachgewiesen werden.

Beispiel 9: 10,00 g einer 27,1 %-igen Polymerlösung gemäss Beispiel 7 werden mit 0,0268 g Darocur 1173 (0,7 % bezogen auf den Polymergehalt) und 0,922 g Methylmethacrylat versetzt. Nach Zugabe von 2,3 g Methanol erhält man eine klare Lösung. Diese Lösung wird analog wie in Beispiel 8 mit einer 200 Watt Oriellampe für eine Dauer von 14 Sekunden belichtet. Man erhält eine transparente Kontaktlinse mit einem Wassergehalt von 70,4 %.

Beispiel 10: 12,82 g einer 24,16 %-igen Lösung des Präpolymeren von Beispiel 4 werden mit 1,04 g Acrylamid und 0,03 g Darocur 1173 versetzt. Die klare Lösung wird anschliessend analog zu Beispiel 8 mit einer 200 Watt Oriellampe während 14 Sekungen belichtet. Man erhält eine Kontaktlinse mit einem Wassergehalt von 64,4 %.

Die Polymere können auf an sich bekannte Weise zu Formkörpern verarbeitet werden, insbesondere zu Kontaktlinsen, beispielsweise indem die Photovernetzung der erfindungsgemässen Präpolymere in Kontaktlinsenformen in der Art und Weise erfolgt wie dies weiter oben ausführlich beschrieben ist. Weitere Beispiele für erfindungsgemässe Formkörper, neben Kontaktlinsen, sind biomedizinische oder speziell ophthalmische Formkörper, z.B. Intraokularlinsen, Augenverbände, Formkörper, die in der Chirurgie Verwendung finden können, wie Herzklappen, künstliche Arterien oder dergleichen, ferner Filme oder Membranen, z.B. Membranen für Diffusionskontrolle, photostrukturierbare Folien für Informationsspeicherung, oder Photoresistmaterialien, z.B. Membranen oder Formkörper für Aetzresist oder Siebdruckresist.

Kontaktlinsen, die ein Polymer, wie es oben beschrieben ist, umfassen oder im wesentlichen oder vollständig aus einem solchen Polymer bestehen, weisen eine Palette ungewöhnlicher und äusserst vorteilhafter Eigenschaften auf. Unter diesen Eigenschaften sind beispielsweise ihre ausgezeichnete Verträglichkeit mit der menschlichen Cornea zu nennen, die auf einem ausgewogenen Verhältnis von Wassergehalt, Sauerstoffdurchlässigkeit und mechanischen Eigenschaften beruhen. Im übrigen sind die erfindungsgemässen Kontaktlinsen von hoher Formbeständigkeit. Auch nach Autoklavierung bei z.B. etwa 120 °C können keine Formveränderungen nachgewiesen werden.

Ferner kann hervorgehoben werden, dass solche Kontaktlinsen, wie beschrieben, auf gegenüber dem Stand der Technik sehr einfache und effiziente Weise hergestellt werden können. Dies beruht auf mehreren Faktoren. Einerseits sind die Ausgangsmaterialien kostengünstig zu beschaffen oder herzustellen. Zum zweiten bietet sich der Vorteil, dass die Präpolymere überraschenderweise stabil sind, so dass sie einer hochgradigen Reinigung unterzogen werden können. Zur Vernetzung kann daher ein Material eingesetzt werden, das praktisch keiner nachträglichen Reinigung mehr bedarf, wie insbesondere einer aufwendigen Extraktion von unpolymerisierten Bestandteilen. Ferner kann die Polymerisation in wässriger Lösung erfolgen, so dass ein nachträglicher Hydratationsschritt nicht erforderlich ist. Letztlich erfolgt die Photopolymerisation innerhalb kurzer Zeit, so dass der Herstellungsprozess der erfindungsgemässen Kontaktlinsen auch unter diesem Gesichtspunkt ausserordentlich wirtschaftlich gestaltet werden kann.

Alle die vorstehend genannten Vorteile gelten naturgemäss nicht nur für Kontaktlinsen, sondern auch für andere Formkörper. Die Summe der verschiedenen vorteilhaften Aspekte bei der Herstellung der Formkörper führt dazu, dass die Formkörper besonders als Massenartikel geeignet sind, wie beispielsweise als Kontaktlinsen, die während einer kurzen Zeitspanne getragen werden und dann durch neue Linsen ersetzt werden.

## Patentansprüche

1. Verfahren zur Herstellung von Formkörpern (CL), insbesondere optischen Linsen, speziell Kontaktlinsen, aus einem durch Beaufschlagung mit geeigneter Energie (3) vernetzbaren Ausgangsmaterial (M) in einer zumindest teilweise für die betreffende Energie durchlässigen Form (1) mit einer Formkavität (15), welche die Gestalt des herzustellenden Formkörpers (CL) festlegt, wobei das Ausgangsmaterial (M) in wenigstens teilweise noch unvernetztem Zustand in die Form (1) eingebracht und in dieser durch Beaufschlagung mit der betreffenden Energie (3) in einen für die Entformbarkeit des Formkörpers ausreichenden Ausmass vernetzt wird, dadurch gekennzeichnet, dass das Befüllen der Formkavität (15) in dem in zumindest teilweise noch unvernetztem Zustand befindlichen Ausgangsmaterial (M) erfolgt.

2. Verfahren nach Anspruch 1, dadurch gekennzeichnet, dass zum Befüllen der Formkavität (15) diese mit einem sie räumlich umgebenden Reservoir (R) in Verbindung gebracht wird, in welchem das Ausgangsmaterial bereitgestellt wird und aus welchem die Formkavität (15) geflutet wird.

3. Verfahren nach einem der Ansprüche 1 oder 2, dadurch gekennzeichnet, dass die Form (1) in dem Ausgangsmaterial geschlossen wird.

4. Verfahren nach Anspruch 1, dadurch gekennzeichnet, dass eine Form verwendet wird, die einen Behälter (10a,10b) und ein in diesem Behälter verschiebbares Formteil (11a,11b) umfasst, welches zum Öffnen und Schliessen der Form von der ihm gegenüberliegenden Behälterwand (100a,100b) weg und auf diese Behälterwand zu bewegbar ist, wobei während des Öffnens der Form Ausgangsmaterial zwischen Behälterwand (100a,100b) und Formteil (11a,11b) zugeführt und während des Schliessens der Form Ausgangsmaterial wieder abgeführt wird.

5. Verfahren nach Anspruch 4, dadurch gekennzeichnet, dass eine Form (1) mit zwei Formhälften verwendet wird, wobei die eine Formhälfte an der Behälterwand (100a,100b) und die andere Formhälfte an dem verschiebbaren Formteil (11a,11b) vorgesehen ist.

6. Verfahren nach Anspruch 5, dadurch gekennzeichnet, dass eine Form mit einer Vaterformhälfte und einer Mutterformhälfte verwendet wird, bei der an der Behälterwand (100a,100b) die Vaterformhälfte und an dem verschiebbaren Formteil (11a,11b) die Mutterformhälfte vorgesehen ist.

7. Verfahren nach einem der Ansprüche 4 bis 6, dadurch gekennzeichnet, dass zum Zu- und Abführen des Ausgangsmaterials Pumpen (P1,P2) verwendet werden.

8. Verfahren nach einem der Ansprüche 4 bis 6, dadurch gekennzeichnet, dass zum Zu- und Abführen des Ausgangsmaterials das verschiebbare Formteil (11a,11b) angetrieben wird.

9. Verfahren nach einem der Ansprüche 1 bis 8, dadurch gekennzeichnet, dass der vernetzte Formkörper (CL) durch Ausspülen der Form mit Ausgangsmaterial entformt wird.

10. Verfahren nach einem der Ansprüche 4 bis 8 und nach Anspruch 9, dadurch gekennzeichnet, dass der Formkörper (CL) durch die Strömung des Ausgangsmaterials beim Öffnen der Form von der Form abgelöst und beim Schliessen der Form aus der Form herausgespült wird.

11. Verfahren nach Anspruch 9, dadurch gekennzeichnet, dass in einem ersten Zyklus die Form geöffnet und wieder geschlossen wird, anschliessend zumindest die für die Entformbarkeit des Formkörpers (CL) erforderliche Vernetzung durch Beaufschlagung mit Energie (3) erfolgt, und dass in einem zweiten Zyklus die Form erneut geöffnet wird, wobei der Formkörper von der Form abgelöst wird und wobei anschliessend das Formteil (11a) zum Schliessen der Form wieder auf die gegenüberliegende Behälterwand (100a) zu bewegt wird, wobei der vernetzte Formkörper aus der Form herausgespült wird.

12. Verfahren nach einem der Ansprüche 1 bis 8, dadurch gekennzeichnet, dass der vernetzte Formkörper mittels einer Greifeinrichtung (4) aus der Form entnommen wird.

13. Verfahren nach einem der Ansprüche 4 bis 8 und nach Anspruch 12, dadurch gekennzeichnet, dass der mittels der Greifeinrichtung (4,4b) aus der Form entnommene Formkörper (CL) ausserhalb des Raums zwischen dem verschiebbaren Formteil (11b) und der gegenüberliegenden Behälterwand (100b) auf dem verschiebbaren Formteil (11b) abgelegt wird.

14. Verfahren nach Anspruch 13, dadurch gekennzeichnet, dass der auf dem verschiebbaren Formteil abgelegte Formkörper durch Unterdruck (NP) an diesem festgehalten und dann durch Überdruck (HP) von diesem abgelöst wird.

15. Verfahren nach einem der Ansprüche 1 bis 14, dadurch gekennzeichnet, dass die Form nach dem Einbringen des Ausgangsmaterials in die Formkavität nicht vollständig geschlossen wird, so dass ein die Formkavität umschliessender, mit dieser in Verbindung stehender, unvernetztes Ausgangsmaterial enthaltender Ringspalt (16) offen bleibt.

16. Verfahren nach Anspruch 15, dadurch gekennzeichnet, dass die Form während der fortschreitenden Vernetzung des Materials dem Vernetzungsschwund folgend weiter geschlossen wird.

17. Verfahren nach Anspruch 16, dadurch gekennzeichnet, dass ein vor der Vernetzung wenigstens zäh fliessfähiges Ausgangsmaterial verwendet wird, und dass zur Schwundkompensation Ausgangsmaterial durch den Ringspalt (16) in die Formkavität (15) nachfliessen kann.

18. Verfahren nach einem der Ansprüche 1 bis 17, dadurch gekennzeichnet, dass das Ausgangsmaterial ein Präpolymer ist, bei dem es sich um ein Derivat eines Polyvinylalkohols mit einem Molekulargewicht von mindestens etwa 2000 handelt, das von etwa 0,5 bis etwa 80 %, bezogen auf die Anzahl Hydroxylgruppen des Polyvinylalkohols, Einheiten der Formel I enthält, 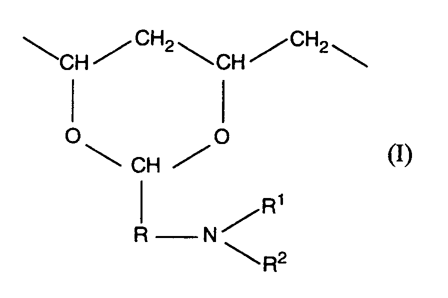 worin R für Niederalkylen mit bis zu 8 Kohlenstoffatomen steht, R¹ für Wasserstoff oder Niederalkyl steht und R² einen olefinisch ungesättigten, elektronenziehenden, copolymerisierbaren Rest mit vorzugsweise bis zu 25 Kohlenstoffatomen bedeutet.

19. Verfahren nach Anspruch 18, dadurch gekennzeichnet, dass das Ausgangsmaterial ein Präpolymer ist, worin R² für einen olefinisch ungesättigten Acylrest der Formel R³-CO-steht, worin R³ einen olefinisch ungesättigten copolymerisierbaren Rest mit 2 bis 24 Kohlenstoffatomen, bevorzugt mit 2 bis 8 Kohlenstoffatomen, besonders bevorzugt mit 2 bis 4 Kohlenstoffatomen, bedeutet.

20. Verfahren nach Anspruch 19, dadurch gekennzeichnet, dass das Ausgangsmaterial ein Präpolymer ist, worin R³ für Alkenyl mit 2 bis 8 Kohlenstoffatomen steht.

21. Verfahren nach Anspruch 18, dadurch gekennzeichnet, dass das Ausgangsmaterial ein Präpolymer ist, worin der Rest R² für einen Rest der Formel II steht,
-CO-NH-(R⁴-NH-CO-O)_{q}-R⁵-O-CO-R³ (II)
worin q für Null oder eins steht und R⁴ und R⁵ unabhängig voneinander Niederalkylen mit 2 bis 8 Kohlenstoffatomen, Arylen mit 6 bis 12 Kohlenstoffatomen, eine gesättigte bivalente cycloaliphatische Gruppe mit 6 bis 10 Kohlenstoffatomen, Arylenalkylen oder Alkylenarylen mit 7 bis 14 Kohlenstoffatomen oder Arylenalkylenarylen mit 13 bis 16 Kohlenstoffatomen bedeuten und worin R³ einen olefinisch ungesättigten copolymerisierbaren Rest mit 2 bis 24 Kohlenstoffatomen, bevorzugt mit 2 bis 8 Kohlenstoffatomen, besonders bevorzugt mit 2 bis 4 Kohlenstoffatomen, bedeutet.

22. Verfahren gemäss Anspruch 18, dadurch gekennzeichnet, dass es sich bei dem Ausgangsmaterial um ein Derivat eines Polyvinylalkohols mit einem Molekulargewicht von mindestens etwa 2000 handelt, das von etwa 0,5 bis etwa 80 %, bezogen auf die Anzahl Hydroxylgruppen des Polyvinylalkohols, Einheiten der Formel III enthält, 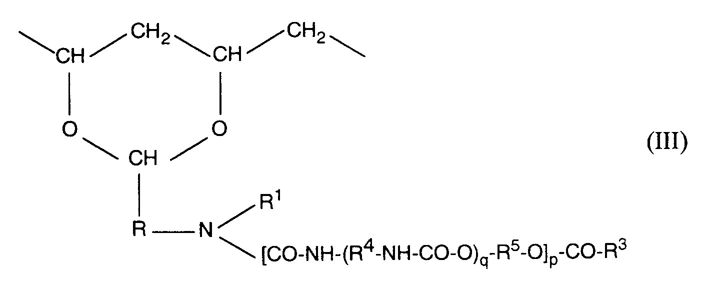 worin R für Niederalkylen steht, R¹ für Wasserstoff oder Niederalkyl steht, p den Wert Null oder eins aufweist, q den Wert Null oder eins aufweist, R³ einen olefinisch ungesättigten copolymerisierbaren Rest mit 2 bis 8 Kohlenstoffatomen bedeutet und R⁴ und R⁵ unabhängig voneinander Niederalkylen mit 2 bis 8 Kohlenstoffatomen, Arylen mit 6 bis 12 Kohlenstoffatomen, eine gesättigte bivalente cycloaliphatische Gruppe mit 6 bis 10 Kohlenstoffatomen, Arylenalkylen oder Alkylenarylen mit 7 bis 14 Kohlenstoffatomen oder Arylenalkylenarylen mit 13 bis 16 Kohlenstoffatomen bedeuten.

23. Verfahren gemäss Anspruch 22, dadurch gekennzeichnet, dass das Ausgangsmaterial ein Präpolymer ist, worin R für Niederalkylen mit bis zu 6 Kohlenstoffatomen steht, p Null bedeutet und R³ Alkenyl mit 2 bis 8 Kohlenstoffatomen bedeutet.

24. Verfahren gemäss Anspruch 22, dadurch gekennzeichnet, dass das Ausgangsmaterial ein Präpolymer ist, worin R für Niederalkylen mit bis zu 6 Kohlenstoffatomen steht, p eins bedeutet, q Null bedeutet, R⁵ für Niederalkylen mit 2 bis 6 Kohlenstoffatomen steht und R³ Alkenyl mit 2 bis 8 Kohlenstoffatomen bedeutet.

25. Verfahren gemäss Anspruch 22, dadurch gekennzeichnet, dass das Ausgangsmaterial ein Präpolymer ist, worin R für Niederalkylen mit bis zu 6 Kohlenstoffatomen steht, p eins bedeutet, q eins bedeutet, R⁴ für Niederalkylen mit 2 bis 6 Kohlenstoffatomen, Phenylen, unsubstituiert oder durch Niederalkyl substituiert, Cyclohexylen oder Cyclohexylen-niederalkylen, unsubstituiert oder durch Niederalkyl substituiert, Phenylen-niederalkylen, Niederalkylen-phenylen oder Phenylen-niederalkylen-phenylen steht, R⁵ für Niederalkylen mit 2 bis 6 Kohlenstoffatomen steht und R³ Alkenyl mit 2 bis 8 Kohlenstoffatomen bedeutet.

26. Verfahren gemäss Anspruch 18, bei dem es sich bei dem Ausgangsmaterial um ein Derivat eines Polyvinylalkohols mit einem Molekulargewicht von mindestens etwa 2000 handelt, das von etwa 1 bis etwa 15 %, bezogen auf die Anzahl Hydroxylgruppen des Polyvinylalkohols, Einheiten der Formel I enthält.

27. Vorrichtung zur Herstellung von Formkörpern (CL), insbesondere optischen Linsen, speziell Kontaktlinsen, mit einer schliess- und öffenbaren Form (1), die eine die Gestalt des herzustellenden Formkörpers festlegende Formkavität (15) aufweist, welche Form zur Aufnahme eines vernetzbaren Ausgangsmaterials bestimmt und wenigstens teilweise durchlässig ausgebildet ist für von aussen zugeführte, die Vernetzung des Ausgangsmaterials bewirkende Energie (3), und mit einer Quelle (2a) für die Energie sowie mit Mitteln (2b) zur Beaufschlagung der Form mit der Energie, dadurch gekennzeichnet, dass beim Befüllen der Formkavität (15) diese in zumindest teilweise noch in unvernetztem Zustand befindlichem Ausgangsmaterial (M) angeordnet ist.

28. Vorrichtung nach Anspruch 27, dadurch gekennzeichnet, dass sie ein Reservoir (R) zur Bereitstellung des Ausgangsmaterials umfasst, welches die Formkavität (15) räumlich umgibt und mit der Formkavität (15) verbindbar ist, und dass beim Befüllen der Formkavität das Reservoir (R) mit der Formkavität (15) verbunden ist und diese flutet.

29. Vorrichtung nach einem der Ansprüche 27 oder 28, dadurch gekennzeichnet, dass sie Mittel zum Schliessen (1a) der im Ausgangsmaterial angeordneten Form (1) umfasst.

30. Vorrichtung nach einem der Ansprüche 27 bis 29, dadurch gekennzeichnet, dass die Form einen Behälter (10a,10b) und ein in diesem Behälter verschiebbares Formteil (11a,11b) umfasst, welches zum Öffnen und Schliessen der Form von der ihm gegenüberliegenden Behälterwand (100a,100b) weg und auf diese Behälterwand (100a,100b) zu bewegbar ist, und dass in dem Behälter ein Einlass (101a,101b) vorgesehen ist, durch den während des Öffnens der Form Ausgangsmaterial zwischen Behälterwand (100a,100b) und Formteil (11a,11b) hineinströmt, und dass in dem Behälter ein Auslass (102a,102b) vorgesehen ist, durch den während des Schliessens der Form Ausgangsmaterial wieder herausströmt.

31. Vorrichtung nach Anspruch 30, dadurch gekennzeichnet, dass die Form zwei Formhälften aufweist, wobei eine Formhälfte an der Behälterwand (100a,100b) und die andere an dem verschiebbaren Formteil (11a,11b) vorgesehen ist.

32. Vorrichtung nach Anspruch 31, dadurch gekennzeichnet, dass die Form eine Vaterformhälfte und eine Mutterformhälfte aufweist, und dass die Vaterformhälfte an der Behälterwand (100a,100b) und die Mutterformhälfte an dem verschiebbaren Formteil (11a,11b) vorgesehen ist.

33. Vorrichtung nach einem der Ansprüche 30 bis 32, dadurch gekennzeichnet, dass Pumpen (P1,P2) vorgesehen sind, die beim Öffnen der Form durch den Einlass (101a,101b) Ausgangsmaterial zwischen Behälterwand (100a,100b) und Formteil (11a,11b) zuführen und beim Schliessen der Form durch den Auslass (102a,102b) wieder abführen.

34. Vorrichtung nach einem der Ansprüche 30 bis 32, dadurch gekennzeichnet, dass Mittel zum Antreiben des verschiebbaren Formteils (11a,11b) vorgesehen sind.

35. Vorrichtung nach einem der Ansprüche 27 bis 34, dadurch gekennzeichnet, dass Mittel zum Erzeugen einer Strömung vorgesehen sind, die den Formkörper beim Öffnen der Form von der Form ablöst und beim Schliessen der Form aus der Form herausspült.

36. Vorrichtung nach Anspruch einem der Ansprüche 27 bis 34, dadurch gekennzeichnet, dass eine Greifeinrichtung (4) vorgesehen ist, welche den vernetzten Formkörper (CL) aus der Form entnimmt.

37. Vorrichtung nach einem der Ansprüche 30 bis 34 und nach Anspruch 36, dadurch gekennzeichnet, dass der Behälter (10b) auf einer von der formgebenden Fläche (100b) verschiedenen Behälterwand (103b) eine Ausbuchtung oder Nische (104b) aufweist, die sich im wesentlichen in Richtung der Bewegung des verschiebbaren Formteils (11b) erstreckt, wobei in dieser Ausbuchtung oder Nische (104b) die Greifeinrichtung (4b) angeordnet ist, und dass das verschiebbare Formteil (11b) auf einer Aussenwand (113b), die nicht der formgebenden Behälterwand (100b) gegenüberliegt, eine Einbuchtung (114b) aufweist, in welche hinein die Greifeinrichtung (4b) den entnommenen Formkörper (CL) ablegt.

38. Vorrichtung nach Anspruch 37, dadurch gekennzeichnet, dass das verschiebbare Formteil einen zu der Einbuchtung (114b) führenden Kanal (115b) aufweist, der an eine Unter- bzw. Überdruckquelle (P3) anschliessbar ist, welcher Kanal (115b) dann, wenn die Greifeinrichtung (4b) den entnommenen Formkörper (CL) in die Einbuchtung (114b) des Formteils (11b) hinein ablegt, an die Unterdruckquelle angeschlossen und anschliessend zum Ablösen der Linse an die Überdruckquelle angeschlossen ist.

39. Vorrichtung nach einem der Ansprüche 31 bis 38, dadurch gekennzeichnet, dass die Form mit Distanzmitteln (19) versehen ist, welche die beiden Formhälften bei geschlossener Form in geringem Abstand zueinander halten, so dass ein die Formkavität (15) umschliessender und mit dieser in Verbindung stehender Ringspalt (16) gebildet wird.

40. Vorrichtung nach Anspruch 39, dadurch gekennzeichnet, dass die Form mit elastischen Mitteln oder Verstellmitteln versehen ist, welche eine dem Vernetzungsschwund folgende Annäherung der beiden Formhälften erlauben.

## Claims

1. A process for the manufacture of mouldings (CL), especially optical lenses, specifically contact lenses, from a starting material (M) that is crosslinkable by the impingement of suitable energy (3), in a mould (1) that is at least partially permeable to the energy concerned and that has a mould cavity (15) determining the shape of the moulding (CL) to be produced, the starting material (M) being introduced into the mould (1) in a still at least partially uncrosslinked state, and being crosslinked in that mould, to a degree sufficient for it to be possible for the moulding to be released from the mould, by impingement of the energy (3) concerned, wherein the filling of the mould cavity (15) is carried out in the starting material (M) that is still at least partially in the uncrosslinked state.

2. A process according to claim 1, wherein for filling the mould cavity (15) the cavity is connected to a reservoir (R) which surrounds it, in which the starting material is stored and from which the mould cavity (15) is flooded.

3. A process according to either claim 1 or claim 2, wherein the mould (1) is closed in the starting material.

4. A process according to claim 1, wherein a mould is used that comprises a container (10a, 10b) and a mould member (11a, 11b) that is displaceable in that container and can be moved away from and towards the container wall (100a, 100b) lying opposite it for the purpose of opening and closing the mould, starting material being fed in between the container wall (100a, 100b) and the mould member (11a, 11b) as the mould is opened and conveyed away again as the mould is closed.

5. A process according to claim 4, wherein a mould (1) having two mould halves is used in which one mould half is provided on the container wall (100a, 100b) and the other mould half is provided on the displaceable mould member (11a, 11b).

6. A process according to claim 5, wherein a mould having a male mould half and a female mould half is used, the male mould half being provided on the container wall (100a, 100b) and the female mould half being provided on the displaceable mould member (11a, 11b).

7. A process according to any one of claims 4 to 6, wherein pumps (P1, P2) are used to feed in and convey away the starting material.

8. A process according to any one of claims 4 to 6, wherein the displaceable mould member (11a, 11b) is driven in order to feed in and convey away the starting material.

9. A process according to any one of claims 1 to 8, wherein the crosslinked moulding (CL) is released from the mould by flushing out the mould with starting material.

10. A process according to any one of claims 4 to 8 and according to claim 9, wherein the moulding (CL) is separated from the mould by the flow of starting material as the mould is opened and is flushed out of the mould by the flow of starting material as the mould is closed.

11. A process according to claim 9, wherein in a first cycle the mould is opened and closed again, then at least the crosslinking necessary for it to be possible for the moulding (CL) to be released from the mould is effected by the impingement of energy (3) and, in a second cycle, the mould is opened again, the moulding being separated from the mould and the mould member (11a) then being moved back towards the opposite-lying container wall (100a) again in order to close the mould, in the course of which the crosslinked moulding is flushed out of the mould.

12. A process according to any one of claims 1 to 8, wherein the crosslinked moulding is removed from the mould by means of a gripping device (4).

13. A process according to any one of claims 4 to 8 and according to claim 12, wherein the moulding (CL) removed from the mould by the gripping device (4, 4b) is deposited on the displaceable mould member (11b) outside the space between the displaceable mould member (11b) and the opposite-lying container wall (100b).

14. A process according to claim 13, wherein the moulding deposited on the displaceable mould member is held fast thereto by negative pressure (NP) and then released from it by positive pressure (HP).

15. A process according to any one of claims 1 to 14, wherein the mould is not fully closed after the introduction of the starting material into the mould cavity, so that an annular gap (16) containing uncrosslinked starting material remains open, which gap surrounds the mould cavity and is in communication with that mould cavity.

16. A process according to claim 15, wherein the mould is closed further following crosslinking shrinkage as crosslinking of the material progresses.

17. A process according to claim 16, wherein a starting material that is of at least viscous flowability prior to the crosslinking is used, and wherein starting material can flow back through the annular gap (16) into the mould cavity (15) to compensate for shrinkage.

18. A process according to any one of claims 1 to 17, wherein the starting material is a prepolymer that is a derivative of a polyvinyl alcohol having a molecular weight of at least about 2000 that, based on the number of hydroxy groups of the polyvinyl alcohol, comprises from approximately 0.5 to approximately 80 % of units of formula I 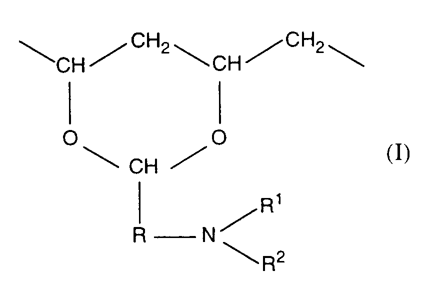 wherein
R is lower alkylene having up to 8 carbon atoms,
R¹ is hydrogen or lower alkyl and
R² is an olefinically unsaturated, electron-attracting, copolymerisable radical preferably having up to 25 carbon atoms.

19. A process according to claim 18, wherein the starting material is a prepolymer wherein R² is an olefinically unsaturated acyl radical of formula R³-CO-, in which R³ is an olefinically unsaturated copolymerisable radical having from 2 to 24 carbon atoms, preferably from 2 to 8 carbon atoms, especially preferably from 2 to 4 carbon atoms.

20. A process according to claim 19, wherein the starting material is a prepolymer wherein R³ is alkenyl having from 2 to 8 carbon atoms.

21. A process according to claim 18, wherein the starting material is a prepolymer wherein the radical R² is a radical of formula II
-CO-NH-(R⁴-NH-CO-O)_{q}-R⁵-O-CO-R³ (II)
wherein
q is zero or one and
R⁴ and R⁵ are each independently lower alkylene having from 2 to 8 carbon atoms, arylene having from 6 to 12 carbon atoms, a saturated divalent cycloaliphatic group having from 6 to 10 carbon atoms, arylenealkylene or alkylenearylene having from 7 to 14 carbon atoms or arylenealkylenearylene having from 13 to 16 carbon atoms, and
R³ is an olefinically unsaturated copolymerisable radical having from 2 to 24 carbon atoms, preferably from 2 to 8 carbon atoms, especially preferably from 2 to 4 carbon atoms.

22. A process according to claim 18 wherein the starting material is a derivative of a polyvinyl alcohol having a molecular weight of at least about 2000 that, based on the number of hydroxy groups of the polyvinyl alcohol, comprises from approximately 0.5 to approximately 80 % of units of formula III 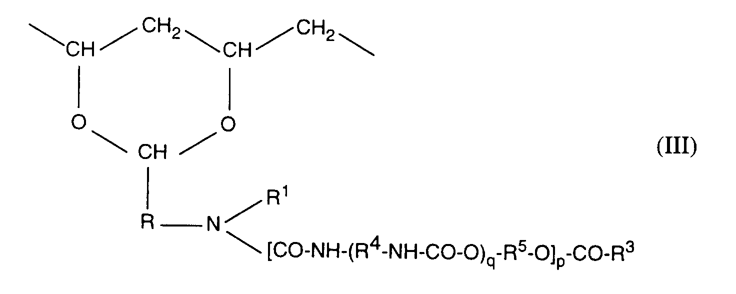 wherein
R is lower alkylene,
R¹ is hydrogen or lower alkyl,
p is zero or one,
q is zero or one,
R³ is an olefinically unsaturated copolymerisable radical having from 2 to 8 carbon atoms and
R⁴ and R⁵ are each independently lower alkylene having from 2 to 8 carbon atoms, arylene having from 6 to 12 carbon atoms, a saturated divalent cycloaliphatic group having from 6 to 10 carbon atoms, arylenealkylene or alkylenearylene having from 7 to 14 carbon atoms or arylenealkylenearylene having from 13 to 16 carbon atoms.

23. A process according to claim 22, wherein the starting material is a prepolymer wherein
R is lower alkylene having up to 6 carbon atoms,
p is zero and
R³ is alkenyl having from 2 to 8 carbon atoms.

24. A process according to claim 22, wherein the starting material is a prepolymer wherein
R is lower alkylene having up to 6 carbon atoms,
p is one,
q is zero,
R⁵ is lower alkylene having from 2 to 6 carbon atoms and
R³ is alkenyl having from 2 to 8 carbon atoms.

25. A process according to claim 22, wherein the starting material is a prepolymer wherein
R is lower alkylene having up to 6 carbon atoms,
p is one,
q is one,
R⁴ is lower alkylene having from 2 to 6 carbon atoms, phenylene, unsubstituted or substituted by lower alkyl, cyclohexylene or cyclohexylene-lower alkylene, unsubstituted or substituted by lower alkyl, phenylene-lower alkylene, lower alkylene-phenylene or phenylene-lower alkylene-phenylene,
R⁵ is lower alkylene having from 2 to 6 carbon atoms and
R³ is alkenyl having from 2 to 8 carbon atoms.

26. A process according to claim 18, wherein the starting material is a derivative of a polyvinyl alcohol having a molecular weight of at least about 2000 that, based on the number of hydroxy groups of the polyvinyl alcohol, comprises from approximately 1 to approximately 15 % of units of formula I.

27. A device for the manufacture of mouldings (CL), especially optical lenses, specifically contact lenses, having a closable and openable mould (1) that has a mould cavity (15) determining the shape of the moulding to be produced, which mould is intended to receive a crosslinkable starting material and is at least partially permeable to energy (3) that causes the crosslinking of the starting material and is supplied from the outside, and having an energy source (2a) and also means (2b) for the impingement of the energy upon the mould, wherein during filling of the mould cavity (15) the mould cavity is arranged in starting material (M) that is still at least partially in the uncrosslinked state.

28. A device according to claim 27, which comprises a reservoir (R) for supplying the starting material, which reservoir surrounds the mould cavity (15) and can be connected to the mould cavity (15), and wherein during filling of the mould cavity the reservoir (R) is connected to the mould cavity (15) and floods that cavity.

29. A device according to either claim 27 or claim 28, which comprises means (1a) for closing the mould (1) arranged in the starting material.

30. A device according to any one of claims 27 to 29, wherein the mould comprises a container (10a, 10b) and a mould member (11a, 11b) displaceable in that container, which mould member can be moved away from and towards the container wall (100a, 100b) lying opposite it for the purpose of opening and closing the mould, and wherein there is provided in the container an inlet (101a, 101b) through which starting material flows in between the container wall (100a, 100b) and the mould member (11a, 11b) as the mould is opened, and wherein there is provided in the container an outlet (102a, 102b) through which starting material flows out again as the mould is closed.

31. A device according to claim 30, wherein the mould comprises two mould halves, one mould half being provided on the container wall (100a, 100b) and the other on the displaceable mould member (11a, 11b).

32. A device according to claim 31, wherein the mould comprises a male mould half and a female mould half, and wherein the male mould half is provided on the container wall (100a, 100b) and the female mould half is provided on the displaceable mould member (11a, 11b).

33. A device according to any one of claims 30 to 32, wherein pumps (P1, P2) are provided which, as the mould is opened, feed in starting material through the inlet (101a, 101b) and between the container wall (100a, 100b) and the mould member (11a, 11b) and, as the mould is closed, convey starting material away again through the outlet (102a, 102b).

34. A device according to any one of claims 30 to 32, wherein means are provided for driving the displaceable mould member (11a, 11b).

35. A device according to any one of claims 27 to 34, wherein means are provided for producing a flow that separates the moulding from the mould when the mould is opened and flushes the moulding out of the mould when the mould is closed.

36. A device according to any one of claims 27 to 34, wherein a gripping device (4) is provided which removes the crosslinked moulding (CL) from the mould.

37. A device according to any one of claims 30 to 34 and according to claim 36 wherein the container (10b) comprises, on a container wall (103b) other than the shape-giving face (100b), a hollow or recess (104b) that extends substantially in the direction of movement of the displaceable mould member (11b), the gripping device (4b) being arranged in that hollow or recess (104b), and wherein the displaceable mould member (11b) comprises, on an outer wall (113b) that does not lie opposite the shape-giving container wall (100b), an indentation (114b) in which the gripping device (4b) deposits the removed moulding (CL).

38. A device according to claim 37, wherein the displaceable mould member comprises a channel (115b) that leads to the indentation (114b) and can be connected to a negative pressure or positive pressure source (P3), which channel (115b) is connected to the negative pressure source when the gripping device (4b) deposits the removed moulding (CL) in the indentation (114b) of the mould member (11b) and then is connected to the positive pressure source in order to release the lens.

39. A device according to any one of claims 31 to 38, wherein the mould is provided with spacers (19) that hold the two mould halves a small distance apart from one another when the mould is in the closed position, so that an annular gap (16) is formed that surrounds the mould cavity (15) and is in communication with that cavity.

40. A device according to claim 39, wherein the mould is provided with resilient means or displacement means that allow the two mould halves to move closer together following crosslinking shrinkage.

## Revendications

1. Procédé de fabrication d'objets moulés (CL) notamment de lentilles optiques et plus particulièrement de lentilles de contact, à partir d'une matière première (M) pouvant être réticulée par sollicitation avec une énergie appropriée (3), dans un moule (1), perméable au moins en partie à l'énergie utilisée, ce moule comprenant une cavité de moulage (15), qui définit la forme de l'objet moulé à fabriquer (CL), la matière première (M) étant introduite dans le moule (1) dans un état au moins partiellement encore non réticulé, et étant soumise dans ce moule, par sollicitation avec l'énergie correspondante (3), à une réticulation à un degré suffisant pour l'aptitude de démoulage de l'objet moulé, procédé caractérisé en ce que le remplissage de la cavité de moulage (15) s'effectue dans la matière première (M), située dans un état au moins partiellement encore non réticulé.

2. Procédé selon la revendication 1, caractérisé en ce que pour le remplissage de la cavité de moulage (15), celle-ci est amenée en liaison avec un réservoir (R) l'entourant spatialement, dans lequel la matière première est tenue à disposition et à partir duquel la cavité de moulage (15) est remplie.

3. Procédé selon une des revendications 1 ou 2, caractérisé en ce que le moule 1 est fermé dans la matière première.

4. Procédé selon la revendication 1, caractérisé en ce qu'on utilise un moule qui comprend un récipient (10a, 10b) et une partie de moule (11a, 11b), mobile en translation dans ce récipient et qui, pour l'ouverture et la fermeture du moule, est déplaçable respectivement en éloignement de la paroi de récipient (100a, 100b) qui est située en regard et en rapprochement de cette paroi de récipient, et en ce que, pendant l'ouverture du moule, de la matière première est introduite entre la paroi de récipient (100a, 100b) et, pendant la fermeture du moule, la partie de moule (11a, 11b) et de la matière première est à nouveau évacuée.

5. Procédé selon la revendication 4, caractérisé en ce qu'on utilise un moule (1) comportant deux moitiés, une des moitiés du moule étant prévue sur la paroi de récipient (100a, 100b) et l'autre moitié du moule étant prévue sur la partie de moule (11a, 11b) mobile en translation.

6. Procédé selon la revendication 5, caractérisé en ce qu'on utilise un moule comportant une moitié mâle et une moitié femelle et dans lequel la moitié mâle du moule est prévue sur la paroi de récipient (100a, 100b) tandis que la moitié femelle du moule est prévue sur la partie de moule (11a, 11b) mobile en translation.

7. Procédé selon une des revendication 4 à 6, caractérisé en ce que des pompes (P1, P2) sont utilisées pour l'introduction et l'évacuation de la matière première.

8. Procédé selon une des revendications 4 à 6, caractérisé en ce que la partie de moule (11a, 11b) mobile en translation est entraînée pour assurer l'introduction et l'évacuation de la matière première.

9. Procédé selon une des revendications 1 à 8, caractérisé en ce que l'objet moulé réticulé (CL) est démoulé par balayage fluidique du moule avec de la matière première.

10. Procédé selon une des revendications 4 à 8 et selon la revendication 9, caractérisé en ce que l'objet moulé (CL) est séparé du moule par l'écoulement de la matière première lors de l'ouverture du moule, et, lors de la fermeture du moule, il est évacué de celui-ci par balayage fluidique.

11. Procédé selon la revendication 9, caractérisé en ce que dans le premier cycle, le moule est ouvert et refermé, ensuite au moins la réticulation, nécessaire pour l'aptitude de démoulage de l'objet moulé (CL), est produite par sollicitation avec de l'énergie (3) et en ce que dans un second cycle, le moule est à nouveau ouvert, l'objet moulé est séparé du moule et ensuite la partie de moule (11a) est à nouveau déplacée en direction de la paroi de récipient (100a) qui lui est opposée en vue de la fermeture du moule, l'objet moulé réticulé étant évacué du moule par balayage fluidique de celui-ci.

12. Procédé selon une des revendications 1 à 8, caractérisé en ce que l'objet moulé réticulé est enlevé du moule au moyen d'un dispositif de prise (4).

13. Procédé selon une des revendications 4 à 8 et selon la revendication 12, caractérisé en ce que l'objet moulé (CL), enlevé du moule au moyen du dispositif de prise (4, 4b), est déposé sur la partie de moule (11b) mobile en translation à l'extérieur du volume existant entre la partie de moule (11b) mobile en translation et la paroi de récipient (100b) qui lui est opposée.

14. Procédé selon la revendication 13, caractérisé en ce que l'objet moulé, déposé sur la partie de moule mobile en translation, est maintenu sur celle-ci par une dépression (NP) et est ensuite séparé de celle-ci au moyen d'une surpression (HP).

15. Procédé selon une des revendications 1 à 14, caractérisé en ce que le moule, après introduction de la matière première dans la cavité de moulage, n'est pas complètement fermé de sorte qu'un intervalle annulaire (16), contenant de la matière première non réticulée, entourant la cavité de moulage et en liaison avec celle-ci, reste ouvert.

16. Procédé selon la revendication 15, caractérisé en ce que le moule, pendant la progression de réticulation de la matière, est progressivement fermé en suivant le retrait de réticulation.

17. Procédé selon la revendication 16, caractérisé en ce qu'on utilise une matière première fluide, et au moins visqueuse, avant la réticulation et en ce que, pour une compensation de retrait, de la matière première peut pénétrer complémentairement dans la cavité de moulage 15 par l'intermédiaire de l'intervalle annulaire (16).

18. Procédé selon une des revendications 1 à 17, caractérisé en ce que la matière première est un prépolymère consistant en un dérivé d'un alcool polyvinylique de poids moléculaire au moins 2000 environ, qui contient d'environ 0,5 à 80 %, par rapport au nombre de groupes hydroxy de l'alcool polyvinylique, de motifs de formule I 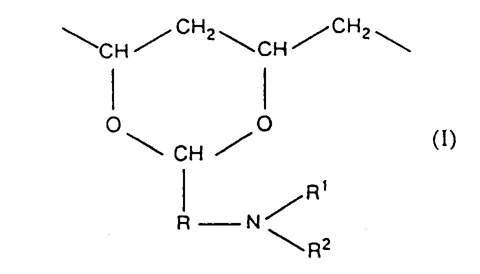 dans laquelle R représente un groupe alkylène inférieur contenant jusqu'à huit atomes de carbone, R¹ représente l'hydrogène ou un groupe alkyle inférieur et R² un groupe à insaturation oléfinique copolymérisable capteur d'électrons, contenant de préférence jusqu'à 25 atomes de carbone.

19. Procédé selon une des revendications 1 à 17, caractérisé en ce que la matière première est un prépolymère pour lequel R² représente un groupe acyle à insaturation oléfinique de formule R³-CO- dans laquelle R³ représente un groupe à insaturation oléfinique copolymérisable en C2-C24, de préférence en C2-C8 et plus spécialement en C2-C4.

20. Procédé selon revendication 19, caractérisé en ce que la matière première est un prépolymère pour lequel R³ représente un groupe alcényle en C2-C8.

21. Procédé selon revendication 18, caractérisé en ce que la matière première est un prépolymère pour lequel R² représente un groupe de formule II
-CO-NH-(R⁴-NH-CO-O)_{q}-R⁵-O-CO-R³ (II)
dans laquelle q est égal à 0 ou 1 et R⁴ et R⁵ représentent chacun, indépendamment l'un de l'autre, un groupe alkylène en C2-C8, arylène en C6-C12, un groupe cycloaliphatique bivalent saturé en C6-C10, un groupe arylènealkylène ou alkylènearylène en C7-C14 ou arylènealkylènearylène en C13-C16, et R³ représente un groupe à insaturation oléfinique copolymérisable en C2-C24, de préférence en C2-C8 et plus spécialement en C2-C4.

22. Procédé selon revendication 18, caractérisé en ce que la matière première est un dérivé d'un alcool polyvinylique de poids moléculaire au moins 2000 environ, contenant d'environ 0,5 à 80 %, par rapport au nombre des groupes hydroxy de l'alcool polyvinylique, de motifs de formule III 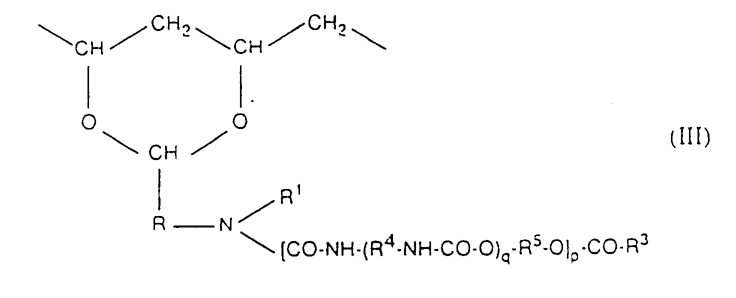 dans laquelle R représente un groupe alkylène inférieur, R¹ représente l'hydrogène ou un groupe alkyle inférieur, p est égal à 0 ou 1, q est égal à 0 ou 1, R³ représente un groupe à insaturation oléfinique copolymérisable en C2-C8 et R⁴ et R⁵ représentent chacun, indépendamment l'un de l'autre, un groupe alkylène inférieur en C2-C8, arylène en C6-C12, un groupe cycloaliphatique bivalent saturé en C6-C10, un groupe arylènealkylène ou alkylènearylène en C7-C14 ou arylènealkylènearylène en C13-C16.

23. Procédé selon revendication 22, caractérisé en ce que la matière première est un prépolymère pour lequel R représente un groupe alkylène inférieur contenant jusqu'à six atomes de carbone, p est égal à 0 et R³ représente un groupe alcényle en C2-C8.

24. Procédé selon revendication 22, caractérisé en ce que la matière première est un prépolymère pour lequel R représente un groupe alkylène inférieur contenant jusqu'à six atomes de carbone, p est égal à 1, q est égal à 0, R⁵ représente un groupe alkylène inférieur en C2-C6 et R³ un groupe alcényle en C2-C8.

25. Procédé selon revendication 22, caractérisé en ce que la matière première est un prépolymère pour lequel R représente un groupe alkylène inférieur contenant jusqu'à six atomes de carbone, p est égal à 1, q est égal à 1, R⁴ représente un groupe alkylène inférieur en C2-C6, un groupe phénylène non substitué ou substitué par un groupe alkyle inférieur, un groupe cyclohexylène ou cyclohexylène-alkylène inférieur non substitué ou substitué par un groupe alkyle inférieur, un groupe phénylène-alkylène inférieur, alkylène inférieur-phénylène ou phénylène-alkylène inférieur-phénylène, R⁵ représente un groupe alkylène inférieur en C2-C6 et R³ un groupe alcényle en C2-C8.

26. Procédé selon revendication 18, dans lequel la matière première est un dérivé d'un alcool polyvinylique de poids moléculaire au moins 2000 environ, qui contient d'environ 1 à 15 %, par rapport au nombre des groupes hydroxy de l'alcool polyvinylique, de motifs de formule I.

27. Appareil pour la fabrication d'objets moulés (CL), notamment de lentilles optiques et particulièrement de lentilles de contact, comprenant un moule (1) pouvant être fermé et ouvert et qui comporte une cavité de moulage (15) définissant la forme de l'objet moulé à fabriquer, ce moule étant conçu pour recevoir une matière première réticulable et étant agencé de façon à être au moins partiellement perméable à une énergie (3), introduite de l'extérieur et produisant la réticulation de la matière première, l'appareil comprenant en outre une source d'énergie (2a) ainsi que des moyens (2b) pour la sollicitation du moule avec l'énergie, appareil caractérisé en ce que, lors du remplissage de la cavité de moulage (15), celle-ci est disposée dans de la matière première (M) se trouvant au moins en partie dans un état non réticulé.

28. Appareil selon la revendication 27, caractérisé en ce qu'il comporte un réservoir (R) pour tenir à disposition la matière première, ce réservoir entourant spatialement la cavité de moulage (15) et pouvant être relié à cette cavité de moulage (15), et en ce que, lors du remplissage de la cavité de moulage, le réservoir (R) est relié à la cavité de moulage (15) et assure son remplissage.

29. Appareil selon une des revendications 27 ou 28, caractérisé en ce qu'il comprend des moyens pour la fermeture (1a) du moule (1) disposé dans la matière première.

30. Appareil selon une des revendications 27 à 29, caractérisé en ce que le moule comprend un récipient (10a, 10b) ainsi qu'une partie de moule (11a, 11b), mobile en translation dans ledit récipient et qui peut être déplacée, pour une ouverture ou une fermeture du moule, respectivement en éloignement de la paroi opposée (100a, 100b) du récipient et en rapprochement de cette paroi de récipient (100a, 100b), en ce qu'il est prévu dans le récipient une entrée (101a, 101b) par laquelle, pendant l'ouverture du moule, de la matière s'écoule entre la paroi de récipient (100a, 100b) et la partie de moule (11a, 11b) et en ce qu'il est prévu dans le récipient une sortie (102a, 102b) par laquelle, pendant la fermeture du moule, de la matière première est à nouveau déchargée.

31. Appareil selon la revendication 30, caractérisé en ce que le moule comporte deux moitiés dont l'une est prévue sur la paroi de récipient (100a, 100b) et l'autre sur la partie de moule (11a, 11b) mobile en translation.

32. Appareil selon la revendication 31, caractérisé en ce que le moule comprend une moitié mâle et une moitié femelle et en ce que la moitié mâle est prévue sur la paroi de récipient (100a, 100b), et la moitié femelle sur la partie de moule (11a, 11b) mobile en translation.

33. Appareil selon une des revendications 30 à 32, caractérisé en ce qu'il est prévu des pompes (P1, P2) qui, lors de l'ouverture du moule, introduisent par l'intermédiaire de l'entrée (101a, 101b), de la matière première entre la paroi de récipient (100a, 100b) et la partie de moule (11a, 11b) et qui, lors de la fermeture du moule, évacuent à nouveau la matière première par l'intermédiaire de la sortie (102a, 102b).

34. Appareil selon une des revendications 30 à 32, caractérisé en ce qu'il est prévu des moyens pour entraîner la partie de moule (11a, 11b) mobile en translation.

35. Appareil selon une des revendications 27 à 34, caractérisé en ce qu'il est prévu des moyens pour produire un écoulement qui, lors de l'ouverture du moule, sépare l'objet moulé du moule et, lors de la fermeture du moule, éjecte fluidiquement l'objet moulé hors du moule.

36. Appareil selon une des revendications 27 à 34, caractérisé en ce qu'il est prévu un dispositif de prise (4), qui enlève du moule l'objet moulé réticulé (CL).

37. Appareil selon une des revendications 30 à 34 et selon la revendication 36, caractérisé en ce que le récipient (10b) comporte, dans une paroi de récipient (103b) différente de la surface de formage (100b), un évidement ou une niche (104b) qui est orientée dans l'essentiel dans la direction de mouvement de la partie de moule (11b) mobile en translation, le dispositif de prise (4b) étant disposé dans cet évidement ou niche (104b), et en ce que la partie de moule (11b) mobile en translation comporte, dans une paroi extérieure (113b) qui est située en regard de la paroi de récipient (100b) assurant le formage, un évidement (114b) dans lequel le dispositif de prise (4b) dépose l'objet moulé enlevé (CL).

38. Appareil selon la revendication 37, caractérisé en ce que la partie de moule mobile en translation comporte un canal (115b) aboutissant à l'évidement (114b) et qui peut être relié à une source de dépression ou à une source de surpression (P3), ledit canal (115b), quand le dispositif de prise (4b) dépose l'objet moulé enlevé (CL) dans l'évidement (114b) de la partie de moule (11b), est relié à la source de dépression et ensuite, pour une séparation de la lentille, il est relié à la source de surpression.

39. Appareil selon une des revendications 31 à 38, caractérisé en ce que le moule est pourvu de moyens d'espacement (19) qui maintiennent les deux moitiés du moule à petite distance l'une de l'autre lors de la fermeture du moule de manière à créer un intervalle annulaire (16) entourant la cavité de moulage (15) et en liaison avec celle-ci.

40. Appareil selon la revendication 39, caractérisé en ce que le moule est pourvu de moyens élastiques ou de moyens de réglage qui permettent un rapprochement des deux moitiés du moule en suivant le retrait de réticulation.
